# EUROPEAN PATENT SPECIFICATION

(11) **EP 2 560 319 B1**
(45) Date of publication and mention of the grant of the patent: **12.10.2016**
(21) Application number: 11768416.7
(22) Date of filing: 11.04.2011
(51) Int. Cl.: H04L 9/14, H04L 29/06, H04L 9/08, H04W 12/02, H04W 4/00, G01D 4/00

(54) **METHOD, APPARATUS AND SYSTEM FOR DATA ENCRYPTION TRANSMISSION IN M2M**
VERFAHREN, VORRICHTUNG UND SYSTEM ZUR VERSCHLÜSSELTEN DATENÜBERTRAGUNG IN M2M
PROCÉDÉ, APPAREIL ET SYSTÈME PERMETTANT LA TRANSMISSION DES INFORMATIONS DE CRYPTAGE DE DONNÉES DANS UNE COMMUNICATION ENTRE MACHINES

(30) Priority: 16.04.2010 CN 201010148632
(43) Date of publication of application: 20.02.2013
(73) Proprietor: Huawei Technologies Co., Ltd., Longgang District Shenzhen, Guangdong 518129 (CN)
(72) Inventor: BIAN, Yonggang, Shenzhen, Guangdong 518129 (CN); MU, Lunjian, Shenzhen, Guangdong 518129 (CN); WANG, Jue, Shenzhen, Guangdong 518129 (CN); ZHANG, Yongjing, Shenzhen, Guangdong 518129 (CN); HUANG, Cheng, Shenzhen, Guangdong 518129 (CN); DING, Chuansuo, Shenzhen, Guangdong 518129 (CN)
(74) Representative: Gill Jennings & Every LLP
(86) International application number: PCT/CN2011/072616
(87) International publication number: WO 2011/127804

(56) References cited:
- CN-A- 1 246 940
- CN-A- 1 972 278
- CN-A- 101 416 467
- CN-A- 101 482 909
- US-A1- 2003 152 224
- US-A1- 2005 065 743
- US-A1- 2007 194 507
- US-B1- 6 240 514

## Description

### FIELD OF THE INVENTION

The present invention relates to the field of communications, and in particular, to a method, an apparatus and a system for data encryption and transmission in M2M.

### BACKGROUND OF THE INVENTION

M2M is an abbreviation of machine-to-machine (Machine-to-Machine) communications, and refers to in a narrow sense that data exchange is implemented between machines through GSM (Global System for Mobile communications, global system for mobile communications)/GPRS (General Packet Radio Service, general packet radio service), UMTS (Universal Mobile Telecommunications System, universal mobile telecommunications system)/HSDPA (High Speed Downlink Packet Access, high speed downlink packet access), and CDMA (Code Division Multiple Access, code division multiple access)/EVDO modules. In a broad sense, M2M further includes man-to-machine and machine-to-man communications.

The application of M2M has increased rapidly in vertical industry markets, and the vertical industries include smart home, security monitoring, electronic health, retailing, logistics monitoring, and so on. However, due to lack of a uniform M2M standard, the application of M2M in the vertical industry is generally that, a manufacturer provides an end-to-end solution to strongly couple a terminal to an application, which results in a high deployment cost. In addition, a great deal of vertical applications that are deployed form isolated information islands independent of one another, making it difficult to achieve information sharing, which easily causes redundant construction. These limit the wide application of vertical M2M applications. Therefore, an M2M platform is constructed to connect machines and applications through a standard interface while shielding the applications from the method for communicating with the machines, which may achieve information sharing, reduce the M2M deployment cost, and further promote the wide application of M2M.

Through the M2M platform, information of a terminal may be distributed to multiple applications. Because much information in the M2M application belongs to sensitive data, encryption is needed for transmission. In order to ensure security in the data encryption and information sharing, reduce the M2M deployment cost, and further promote the wide application of M2M.

Through the M2M platform, information of a terminal may be distributed to multiple applications. Because much information in the M2M application belongs to sensitive data, encryption is needed for transmission. In order to ensure security in the data encryption and transmission process, a symmetric key encryption technology based on a session key is currently used to encrypt data that needs to be transmitted.

During the process of implementing the above data encryption and transmission, the prior art at least has the following problems: when a data sending end reports a large amount of data, the M2M platform needs to decrypt and encrypt the large amount of encrypted report data, which increases operational consumption of the M2M platform, and degrades performance of the M2M platform.

Document US6240514B discloses a packet processing and packet transfer scheme capable of reducing the packet processing overhead by eliminating a need to decrypt and re-encrypt the entire packet at a time of relaying encrypted packets.

### SUMMARY OF THE INVENTION

Embodiments of the present invention provide a method, an apparatus and a system for data encryption and transmission in M2M, to solve the problem that when a data sending end reports a large amount of data, the M2M platform needs to decrypt and encrypt the large amount of encrypted report data, which increases operational consumption of the M2M platform, and degrades performance of the M2M platform.

To achieve the above objectives, the embodiments of the present invention adopt the following technical solutions:
A method for data encryption and transmission in M2M includes:
   determining, by a date sending end, whether a data amount of report data exceeds a set threshold;
   if it is determined that the data amount of the report data exceeds the set threshold, encrypting, by the date sending end, the report data in a KEM-DEM manner, generating a report packet, and sending the report packet to an M2M platform, where the report packet includes data encryption manner indication information for indicating to the M2M platform that the data sending end adopts the KEM-DEM manner to encrypt the report data, wherein the KEM-DEM manner refers to that the report data of the data sending end and other information, which needs to be encrypted, are encrypted separately; and
   if it is determined that the data amount of the report data does not exceed the set threshold, encrypting, by the date sending end, the report data by using a key negotiated by the data sending end with the M2M platform, generating a report packet, and sending the report packet to the M2M platform, where the report packet includes data encryption manner indication information for indicating to the M2M platform that the data sending end adopts a symmetric key manner to encrypt the report data.

A method for data encryption and transmission in M2M includes:
receiving, by a M2M platform, a report packet sent by a data sending end, where the report packet includes data encryption manner indication information for indicating to an M2M platform whether the data sending end adopts a KEM-DEM manner or a symmetric key manner to encrypt report data of the data sending end, wherein the KEM-DEM manner refers to that the report data of the data sending end and other information, which needs to be encrypted, are encrypted separately;
if it is determined that the data sending end adopts the KEM-DEM manner to encrypt the report data of the data sending end, separating, by the M2M platform, an encrypted data key and the encrypted report data from the report packet, and decrypting the encrypted data key by using a key negotiated by the data sending end with the M2M platform, to obtain a data key; and
encrypting, by the M2M platform, the data key by using a key negotiated by the M2M platform with a data receiving end, generating a delivery packet by using the encrypted data key and the encrypted report data, and sending the delivery packet to the data receiving end, where the delivery packet includes data encryption manner indication information for indicating to the data receiving end that the M2M platform adopts the KEM-DEM manner to encrypt the report data of the data sending end; and
if it is determined that the data sending end adopts the symmetric key manner to encrypt the report data of the data sending end, decrypting, by the M2M platform, the encrypted report data included in the report packet by using the key negotiated by the data sending end with the M2M platform, to obtain the report data; and
encrypting, by the M2M platform, the report data by using the key negotiated by the M2M platform with the data receiving end, generating a delivery packet, and sending the delivery packet to the data receiving end, where the delivery packet includes data encryption manner indication information for indicating to the data receiving end that the M2M platform adopts the symmetric key manner to encrypt the report data of the data sending end.

A method for data encryption and transmission includes:
receiving, by a date receiving end a delivery packet sent by an M2M platform, where the delivery packet includes data encryption manner indication information for indicating to a data receiving end whether the M2M platform adopts a KEM-DEM manner or a symmetric key manner to encrypt report data of a data sending end, wherein the KEM-DEM manner refers to that the report data of the data sending end and other information, which needs to be encrypted, are encrypted separately;
if it is determined that the M2M platform adopts the KEM-DEM manner to encrypt the report data of the data sending end, decrypting, by a date receiving end, an encrypted data key included in the delivery packet by using a key negotiated by the M2M platform with the data receiving end, to obtain a data key; and
decrypting, by using the data key, the report data that is encrypted by using the data key and included in the delivery packet, to obtain the report data sent by the data sending end; and
if it is determined that the M2M platform adopts the symmetric key manner to encrypt the report data of the data sending end, decrypting, by the date receiving end, encrypted report data included in the delivery packet by using the key negotiated by the M2M platform with the data receiving end, to obtain the report data sent by the data sending end.

A data sending end includes:
a determination unit, configured to determine whether a data amount of report data exceeds a set threshold, wherein the KEM-DEM manner refers to that the report data of the data sending end and other information, which needs to be encrypted, are encrypted separately;
a first encryption unit, configured to encrypt the report data in a KEM-DEM manner when the determination unit determines that the data amount of the report data exceeds the set threshold;
a first generation unit, configured to generate a report packet by using the encrypted report data obtained through encryption by the first encryption unit;
a first sending unit, configured to send the report packet generated by the first generation unit to an M2M platform, where the report packet includes data encryption manner indication information for indicating to the M2M platform that the data sending end adopts the KEM-DEM manner to encrypt the report data;
a second encryption unit, configured to: when the determination unit determines that the data amount of the report data does not exceed the set threshold, encrypt the report data by using a key negotiated by the data sending end with the M2M platform;
a second generation unit, configured to generate a report packet by using the encrypted report data obtained by the second encryption unit; and
a second sending unit, configured to send the report packet generated by the second generation unit to the M2M platform, where the report packet includes data encryption manner indication information for indicating to the M2M platform that the data sending end adopts a symmetric key manner to encrypt the report data.

An M2M platform includes:
a receiving unit, configured to receive a report packet sent by a data sending end, where the report packet includes data encryption manner indication information for indicating to the M2M platform whether the data sending end adopts a KEM-DEM manner or a symmetric key manner to encrypt report data of the data sending end, wherein the KEM-DEM manner refers to that the report data of the data sending end and other information, which needs to be encrypted, are encrypted separately;
a first decryption unit, configured to: if it is determined that the data sending end adopts the KEM-DEM manner to encrypt the report data of the data sending end, separate an encrypted data key and the encrypted report data from the report packet received by the receiving unit, and decrypt the encrypted data key by using a key negotiated by the data sending end with the M2M platform, to obtain a data key;
a first encryption unit, configured to encrypt, by using a key negotiated by the M2M platform with a data receiving end, the data key obtained through decryption by the first decryption unit;
a first generation unit, configured to generate a delivery packet by using the encrypted data key obtained by the first encryption unit and the encrypted report data separated by the first decryption unit;
a first sending unit, configured to send the delivery packet generated by the first generation unit to the data receiving end, where the delivery packet includes data encryption manner indication information for indicating to the data receiving end that the M2M platform adopts the KEM-DEM manner to encrypt the report data of the data sending end;
a second decryption unit, configured to: if it is determined that the data sending end adopts the symmetric key manner to encrypt the report data of the data sending end, decrypt, by using the key negotiated by the data sending end with the M2M platform, the encrypted report data included in the report packet received by the receiving unit, to obtain the report data;
a second encryption unit, configured to encrypt, by using the key negotiated by the M2M platform with the data receiving end, the report data obtained through decryption by the second decryption unit;
a second generation unit, configured to generate a delivery packet by using the encrypted report data obtained by the second encryption unit; and
a second sending unit, configured to send the delivery packet generated by the second generation unit to the data receiving end, where the delivery packet includes data encryption manner indication information for indicating to the data receiving end that the M2M platform adopts the symmetric key manner to encrypt the report data of the data sending end.

A data receiving end includes:
a receiving unit, configured to receive a delivery packet sent by an M2M platform, where the delivery packet includes data encryption manner indication information for indicating to the data receiving end whether the M2M platform adopts a KEM-DEM manner or a symmetric key manner to encrypt report data of a data sending end, wherein the KEM-DEM manner refers to that the report data of the data sending end and other information, which needs to be encrypted, are encrypted separately;
a first decryption unit, configured to: if it is determined that the M2M platform adopts the KEM-DEM manner to encrypt the report data of the data sending end, decrypt, by using a key negotiated by the M2M platform with the data receiving end, an encrypted data key included in the delivery packet received by the receiving unit, to obtain a data key;
a second decryption unit, configured to decrypt, by using the data key obtained through decryption by the first decryption unit, the report data that is encrypted by using the data key and included in the delivery packet received by the receiving unit, to obtain the report data sent by the data sending end; and
a third decryption unit, configured to: if it is determined that the M2M platform adopts the symmetric key manner to encrypt the report data of the data sending end, decrypt, by using the key negotiated by the M2M platform with the data receiving end, encrypted report data included in the delivery packet received by the receiving unit, to obtain the report data sent by the data sending end.

A system for data encryption and transmission in M2M includes:
a data sending end, configured to, determine whether a data amount of report data exceeds a set threshold; if it is determined that the data amount of the report data exceeds the set threshold, encrypt the report data in a KEM-DEM manner, wherein the KEM-DEM manner refers to that the report data of the data sending end and other information, which needs to be encrypted, are encrypted separately, generate a report packet, and send the report packet to an M2M platform, where the report packet includes data encryption manner indication information for indicating to the M2M platform that the data sending end adopts the KEM-DEM manner to encrypt the report data; and if it is determined that the data amount of the report data does not exceed the set threshold,
encrypt the report data by using a key negotiated by the data sending end with the M2M platform, generate a report packet, and send the report packet to the M2M platform, where the report packet includes data encryption manner indication information for indicating to the M2M platform that the data sending end adopts a symmetric key manner to encrypt the report data;
the M2M platform, configured to, receive a report packet sent by the data sending end, where the report packet includes data encryption manner indication information for indicating to the M2M platform whether the data sending end adopts the KEM-DEM manner or the symmetric key manner to encrypt the report data of the data sending end; if it is determined that the data sending end adopts the KEM-DEM manner to encrypt the report data of the data sending end, separate an encrypted data key and the encrypted report data from the report packet, and decrypt the encrypted data key by using the key negotiated by the data sending end with the M2M platform, to obtain a data key; and encrypt the data key by using a key negotiated by the.M2M platform with a data receiving end, generate a delivery packet by using the encrypted data key and the encrypted report data, and send the delivery packet to the data receiving end, where the delivery packet includes data encryption manner indication information for indicating to the data receiving end that the M2M platform adopts the KEM-DEM manner to encrypt the report data of the data sending end; and if it is determined that the data sending end adopts the symmetric key manner to encrypt the report data of the data sending end, decrypt the encrypted report data included in the report packet by using the key negotiated by the data sending end with the M2M platform, to obtain the report data; and encrypt the report data by using the key negotiated by the M2M platform with the data receiving end, generate a delivery packet, and send the delivery packet to the data receiving end, where the delivery packet includes data encryption manner indication information for indicating to the data receiving end that the M2M platform adopts the symmetric key manner to encrypt the report data of the data sending end; and
the data receiving end, configured to receive a delivery packet sent by the M2M platform, where the delivery packet includes data encryption manner indication information for indicating to the data receiving end whether the M2M platform adopts the KEM-DEM manner or the symmetric key manner to encrypt the report data of the data sending end; if it is determined that the M2M platform adopts the KEM-DEM manner to encrypt the report data of the data sending end, decrypt an encrypted data key included in the delivery packet by using the key negotiated by the M2M platform with the data receiving end, to obtain the data key; and decrypt, by using the data key, the report data that is encrypted by using the data key and included in the delivery packet, to obtain the report data sent by the data sending end; and if it is determined that the M2M platform adopts the symmetric key manner to encrypt the report data of the data sending end, decrypt the encrypted report data included in the delivery packet by using the key negotiated by the M2M platform with the data receiving end, to obtain the report data sent by the data sending end.

Through the technical solutions of the present invention, when the data sending end needs to send the report data to the data receiving end, the data sending end first determines, according to the data amount of the report data, which encryption manner is to be adopted to encrypt the data that needs to be reported. When the data sending end sends a large amount of report data, the data sending end adopts the KEM-DEM manner to encrypt the report data. Because in the KEM-DEM encryption manner, the report data is encrypted once at the data sending end, the encrypted report data is only decrypted at the data receiving end, and the M2M platform only encrypts and decrypts the data key for encrypting the report data, which avoids the process that the M2M platform performs encryption and decryption on the large amount of report data for many times, and significantly reduces the operational overhead of decryption and encryption of the M2M platform when the report data of the data sending end is forwarded, thereby improving the performance of the M2M platform. Moreover, when the data sending end reports a small amount of data, the data sending end adopts the symmetric key encryption manner featuring simple operation to encrypt and decrypt the report data, so as to reduce the operational consumption of the terminal and extend the duration of use of a battery.

### BRIEF DESCRIPTION OF THE DRAWINGS

To illustrate the technical solutions according to the embodiments of the present invention or in the prior art more clearly, accompanying drawings needed for describing the embodiments or the prior art are introduced briefly below. Apparently, the accompanying drawings in the following description are merely some embodiments of the present invention, and persons skilled in the art may further obtain other drawings according to the accompanying drawings without creative efforts.
FIG 1 is a flow chart of a method for data encryption and transmission of a data sending end according to Embodiment 1 of the present invention;
FIG 2 is a flow chart of a method for data encryption and transmission of an M2M platform according to Embodiment 1 of the present invention;
FIG. 3 is a flow chart of a method for data encryption and transmission of a data receiving end according to Embodiment 1 of the present invention;
FIG. 4 is a flow chart of a method for data encryption and transmission by adopting a KEM-DEM manner according to Embodiment 2 of the present invention;
FIG 5 is a flow chart of a method for data encryption and transmission by adopting a symmetric encryption manner according to Embodiment 2 of the present invention;
FIG 6 is a block diagram illustrating a structure of a data sending end according to Embodiment 3 of the present invention;
FIG 7 is a block diagram illustrating a structure of another data sending end according to Embodiment 3 of the present invention;
FIG 8 is a block diagram illustrating a structure of an M2M platform according to Embodiment 3 of the present invention;
FIG. 9 is a block diagram illustrating a structure of a data receiving end according to Embodiment 3 of the present invention; and
FIG. 10 is a block diagram illustrating a structure of a system for data encryption and transmission in M2M according to Embodiment 3 of the present invention.

### DETAILED DESCRIPTION OF THE EMBODIMENTS

The technical solutions in the embodiments of the present invention are clearly and completely described in the following with reference to the accompanying drawings in the embodiments of the present invention. Obviously, the embodiments to be described are part of rather than all of the embodiments of the present invention. All other embodiments obtained by persons skilled in the art based on the embodiments of the present invention without creative efforts shall fall within the protection scope of the present invention.

### Embodiment 1

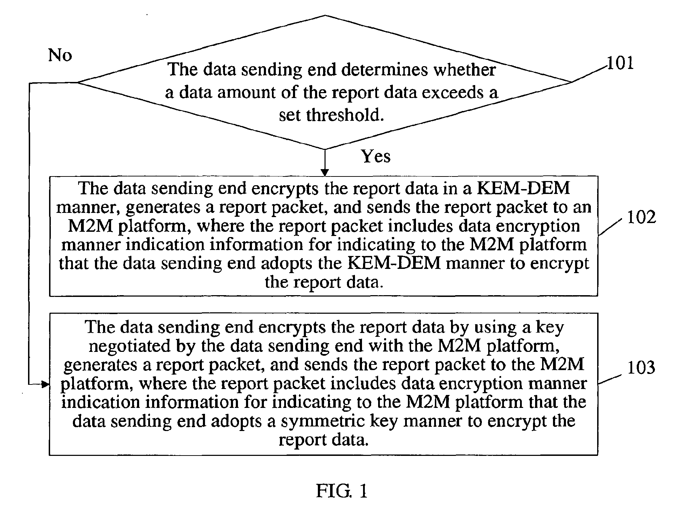

An embodiment of the present invention provides a method for data encryption and transmission in M2M, which is a method for encrypting and transmitting report data by a data sending end. As shown in FIG. 1, the method includes:
101: The data sending end determines whether a data amount of the report data exceeds a set threshold; if it is determined that the data amount of the report data exceeds the set threshold, step 102 is executed; and if it is determined that the data amount of the report data does not exceed the set threshold, step 103 is executed.
   The set threshold may be determined according to a size of a key and an actual processing capability of a terminal, which is not limited in the embodiment of the present invention.
102: The data sending end encrypts the report data in a KEM-DEM manner, generates a report packet, and sends the report packet to an M2M platform, where the report packet includes data encryption manner indication information for indicating to the M2M platform that the data sending end adopts the KEM-DEM manner to encrypt the report data.
   The KEM-DEM manner refers to that the report data of the data sending end and other information, which needs to be encrypted, are encrypted separately. The encrypting the report data in the KEM-DEM manner, generating the report packet, and sending the report packet to the M2M platform may include:
   obtaining a data key for encrypting the report data; using the data key to encrypt the report data, and using a key negotiated by the data sending end with the M2M platform to encrypt the data key; and using the encrypted report data and the encrypted data key to generate a report packet, and sending the report packet to the M2M platform.

   The data key for encrypting the report data of the data sending end may be obtained through the following method, including: randomly generating the data key through a random password generation mechanism; or manually setting the data key. The method for obtaining the data key is not limited in the embodiment of the present invention. As long as the key for encrypting the data that needs to be reported by the data sending end may be obtained, any method in the embodiment of the present invention may be used. The key negotiated by the data sending end with the M2M platform is a session key.
103: The data sending end encrypts the report data by using the key negotiated by the data sending end with the M2M platform, generates a report packet, and sends the report packet to the M2M platform, where the report packet includes data encryption manner indication information for indicating to the M2M platform that the data sending end adopts a symmetric key manner to encrypt the report data.

The key negotiated by the data sending end with the M2M platform is a session key.

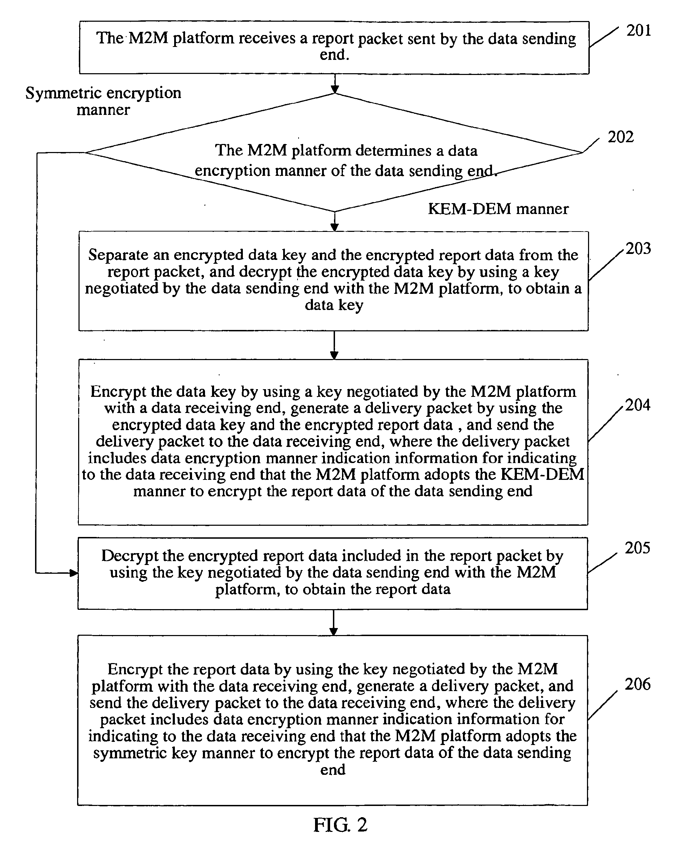

An embodiment of the present invention further provides a method for data encryption and transmission in M2M, which is a method for encrypting and transmitting, by an M2M platform, data reported by a data sending end. As shown in FIG 2, the method includes:
201: The M2M platform receives a report packet sent by the data sending end, where the report packet includes data encryption manner indication information for indicating to the M2M platform whether the data sending end adopts a KEM-DEM manner or a symmetric key manner to encrypt the report data of the data sending end.
   The KEM-DEM manner refers to that the report data of the data sending end and other information, which needs to be encrypted, are encrypted separately.
202: The M2M platform determines, according to the data encryption manner indication information, an encryption manner for encrypting the reported data, which is adopted by the data sending end; if it is determined that the data sending end adopts the KEM-DEM manner to encrypt the report data of the data sending end, step 203 is executed; and if it is determined that the data sending end adopts the symmetric key manner to encrypt the report data of the data sending end, step 205 is executed.
203: The M2M platform separates an encrypted data key and the encrypted report data from the report packet, and decrypts the encrypted data key by using a key negotiated by the data sending end with the M2M platform, to obtain a data key.
   The key negotiated by the data sending end with the M2M platform may be a session key.
204: The M2M platform encrypts the data key by using a key negotiated by the M2M platform with a data receiving end, generates a delivery packet by using the encrypted data key and the encrypted report data, and sends the delivery packet to the data receiving end, where the delivery packet includes data encryption manner indication information for indicating to the data receiving end that the M2M platform adopts the KEM-DEM manner to encrypt the report data of the data sending end.
   The key negotiated by the M2M platform with the data receiving end may be a session key.
205: The M2M platform decrypts the encrypted report data included in the report packet by using the key negotiated by the data sending end with the M2M platform, to obtain the report data.
   The key negotiated by the data sending end with the M2M platform may be a session key.
206: The M2M platform encrypts the report data by using the key negotiated by the M2M platform with the data receiving end, generates a delivery packet, and sends the delivery packet to the data receiving end, where the delivery packet includes data encryption manner indication information for indicating to the data receiving end that the M2M platform adopts the symmetric key manner to encrypt the report data of the data sending end.

The key negotiated by the M2M platform with the data receiving end may be a session key.

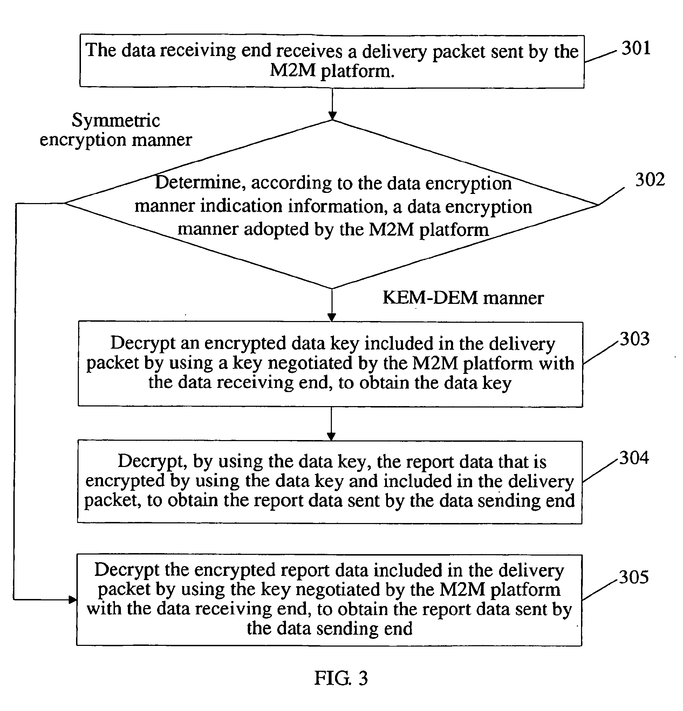

An embodiment of the present invention provides a method for data encryption and transmission, which is a method for data encryption and transmission of a data receiving end. As shown in FIG 3, the method includes:
301: The data receiving end receives a delivery packet sent by an M2M platform, where the delivery packet includes data encryption manner indication information for indicating to the data receiving end whether the M2M platform adopts a KEM-DEM manner or a symmetric key manner to encrypt report data of a data sending end.
302: The data receiving end determines, according to the data encryption manner indication information, an encryption manner for encrypting the report data of the data sending end, which is adopted by the M2M platform; if it is determined that the M2M platform adopts the KEM-DEM manner to encrypt the report data of the data sending end, step 303 is executed; and if it is determined that the M2M platform adopts the symmetric key manner to encrypt the report data of the data sending end, step 305 is executed.
   The KEM-DEM manner refers to that the report data of the data sending end and other information, which needs to be encrypted, are encrypted separately.
303: The data receiving end decrypts an encrypted data key included in the delivery packet by using a key negotiated by the M2M platform with the data receiving end, to obtain the data key.
   The key negotiated by the M2M platform with the data receiving end may be a session key.
304: The data receiving end decrypts, by using the data key, the report data that is encrypted by using the data key and included in the delivery packet, to obtain the report data sent by the data sending end.
305: The data receiving end decrypts the encrypted report data included in the delivery packet by using the key negotiated by the M2M platform with the data receiving end, to obtain the report data sent by the data sending end.

The key negotiated by the M2M platform with the data receiving end may be a session key.

In the embodiment of the present invention, when the data sending end needs to send the report data to the data receiving end, the data sending end first determines, according to the data amount of the report data, which encryption manner is to be adopted to encrypt the data that needs to be reported. When the data sending end sends a large amount of report data, the data sending end adopts the KEM-DEM manner to encrypt the report data. Because in the KEM-DEM encryption manner, the report data is encrypted once at the data sending end, the encrypted report data is only encrypted at the data receiving end, and the M2M platform only encrypts and decrypts the data key for encrypting the report data, which avoids the process that the M2M platform performs encryption and decryption on the large amount of report data for many times, and significantly reduces the operational overhead of decryption and encryption of the M2M platform when the report data of the data sending end is forwarded, thereby improving the performance of the M2M platform. Moreover, when the data sending end reports a small amount of data, the data sending end adopts the symmetric key encryption manner featuring simple operation to encrypt and decrypt the report data, so as to reduce the operational consumption of the terminal and extend the duration of use of the battery.

### Embodiment 2

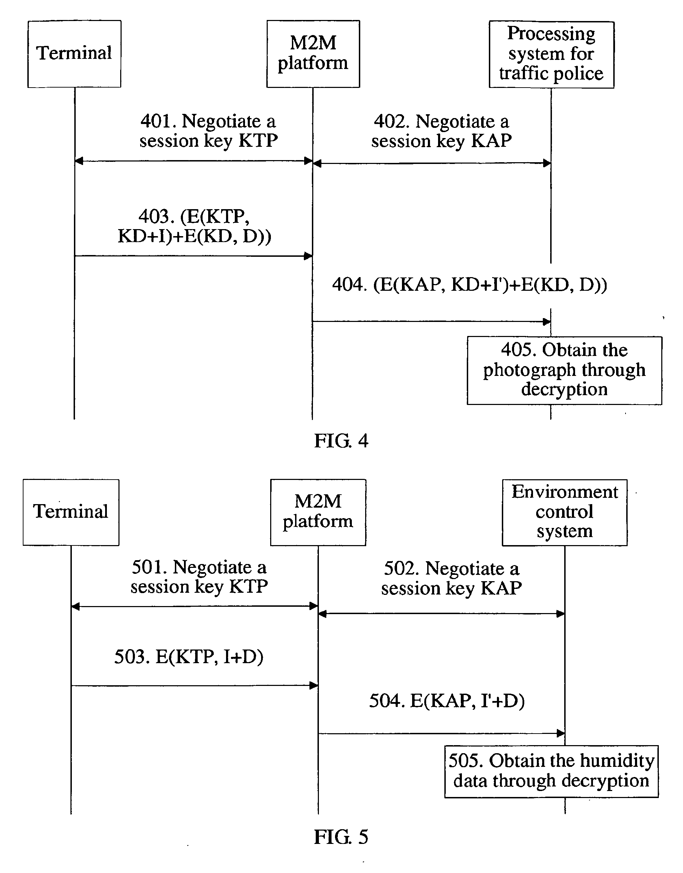

An embodiment of the present invention provides a method for data encryption and transmission in M2M. In the embodiment of the present invention, the method for data encryption and transmission in M2M is specifically illustrated through an example where a data sending end adopts a KEM-DEM manner to encrypt and then transmit a captured photograph, and an example of a key negotiated by the data sending end with an M2M platform and a key negotiated by the M2M platform and a data receiving end are session keys. As shown in FIG. 4, a process that a terminal reports a captured photograph and then an M2M platform forwards the photograph to a processing system for traffic police specifically includes.
401: The terminal and the M2M platform negotiate a session key KTP.
   A process that the terminal and the M2M platform negotiates the session key KTP may utilize the prior art, which is not limited in the embodiment of the present invention.
402: The processing system for traffic police and the M2M platform negotiate a session key KAP.
   A process that the processing system for traffic police and the M2M platform negotiates the session key KAP may utilize the prior art, which is not limited in the embodiment of the present invention.
403: When the terminal captures a photograph at a moment, for example, when a traffic violation occurs, and the photograph needs to be uploaded to the processing system for traffic police through the M2M platform, because a data amount of the photograph exceeds a preset threshold, it is determined that the terminal adopts a KEM-DEM manner to encrypt the photograph and then reports the encrypted photograph, where the preset threshold is a data amount threshold, and the set threshold may be determined according to a size of the key and an actual processing capability of the terminal, which is not limited in the embodiment of the present invention. The process that the terminal adopts the KEM-DEM manner to encrypt the photograph and reports the encrypted photograph is as follows: the terminal generates a data key KD for encrypting data, uses the KD to encrypt photograph data D, uses KTP to encrypt KD and other information I, and then generates a report packet (E(KTP, KD+I)+E(KD, D)) by using the photograph data that is encrypted by using KD, KD that is encrypted by using KTP and the other information I, and sends the generated report packet (E(KTP, KD+I)+E(KD, D)) to the M2M platform, where the report packet includes data encryption manner indication information for indicating to the M2M platform that the terminal adopts the KEM-DEM manner to encrypt the report data.
404: After receiving the report packet sent by the terminal, the M2M platform determines, according to the data encryption manner indication information in the report packet, that the terminal adopts the KEM-DEM encryption manner to encrypt the report data, and accordingly separates the photograph data that is encrypted by using KD, KD that is encrypted by using KTP and the other information I from the packet, obtains KD and the other data I by decryption using KTP, and determines, according to the other data, to forward the photograph to the processing system for traffic police. Therefore, the M2M platform uses KAP to encrypt KD and the other information I, generates a delivery packet (E(KAP, KD+I')+E(KD, D)) by using KD and other information I' that are encrypted by using KAP and the photograph data D that is encrypted by using KD, and sends the delivery packet (E(KAP, KD+I')+E(KD, D)) to the processing system for traffic police, where the delivery packet includes data encryption manner indication information for indicating to the processing system for traffic police that the M2M platform adopts the KEM-DEM manner to encrypt the report data of the terminal.
405: After receiving the delivery packet sent by the M2M platform, the processing system for traffic police determines, according to the data encryption manner indication information in the packet, that the M2M platform adopts the KEM-DEM encryption manner to encrypt the report data of the terminal, and accordingly uses KAP to decrypt the encrypted data key in the delivery packet to obtain KD, and then uses KD to decrypt the encrypted photograph data in the delivery packet, to obtain a final photograph.

An embodiment of the present invention further provides a method for data encryption and transmission in M2M. In this embodiment, the method for data encryption and transmission in M2M is specifically illustrated through an example where a data sending end adopts a symmetric key manner to encrypt and then transmit environmental humidity, and an example of a key negotiated by the data sending end with an M2M platform and a key negotiated by the M2M platform and a data receiving end are session keys. As shown in FIG 5, a process that a terminal reports humidity data and then the M2M platform forwards the data to an environment control system specifically includes:
501: The terminal and the M2M platform negotiate a session key KTP.
   A process that the terminal and the M2M platform negotiates the session key KTP may utilize the prior art, which is not limited in the embodiment of the present invention.
502: The environment control system and the M2M platform negotiate a session key KAP.
   A process that the environment control system and the M2M platform negotiates the session key KAP may utilize the prior art, which is not limited in the embodiment of the present invention.
503: When the terminal obtains humidity data D at a moment and needs to upload the data to the environment control system through the M2M platform, because the humidity data D is a 4-byte floating-point number and has a small data amount which does not exceed a preset threshold, it is determined that the terminal adopts a symmetric key manner to encrypt the humidity data D and then reports the encrypted data, where the preset threshold is a data amount threshold, and the set threshold may be determined according to a size of the key and an actual processing capability of the terminal, which is not limited in the embodiment of the present invention. The process that the terminal adopts the symmetric key manner to encrypt the humidity data D and reports as follows: the terminal uses KTP to encrypt D and other information I, uses D and the other information I that are encrypted by using KTP to generate a report packet E(KTP, I+D), and sends the generated report packet E(KTP, I+D) to the M2M platform, where the report packet includes data encryption manner indication information for indicating the M2M platform that the terminal adopts the symmetric encryption manner to encrypt the report data.
504: After receiving the report packet sent by the terminal, the M2M platform determines, according to the data encryption manner indication information in the report packet, that the terminal adopts the symmetric encryption manner to encrypt the report data, and accordingly uses KTP to decrypt D and the other information I, which are encrypted by using KTP, to obtain D and the other information I, and determines, according to the other information I, that it needs to send the humidity data D to the environment control system. Therefore, the M2M platform uses KAP to encrypt the humidity data D and other information I', generates a delivery packet E(KAP, I'+D), and then sends the delivery packet E(KAP, I'+D) to the environment control system, where the report packet includes data encryption manner indication information for indicating to the environment control system that the M2M platform adopts the symmetric encryption manner to encrypt the report data of the terminal.
505: After receiving the delivery packet sent by the M2M platform, the environment control system determines, according to the data encryption manner indication information in the packet, that the M2M platform adopts the symmetric encryption manner to encrypt the report data of the terminal, and accordingly uses KAP to decrypt the packet delivered by the M2M platform to obtain the humidity data D and the other information I', and then performs subsequent environment control, for example, control of a switch of a humidifier.

In the embodiment of the present invention, when the data sending end needs to send the report data to the data receiving end, the data sending end first determines, according to the data amount of the report data, which encryption manner is to be adopted to encrypt the data that needs to be reported. When the data sending end sends a large amount of report data, the data sending end adopts the KEM-DEM manner to encrypt the report data. Because in the KEM-DEM encryption manner, the report data is encrypted once at the data sending end, the encrypted report data is only encrypted at the data receiving end, and the M2M platform only encrypts and decrypts the data key for encrypting the report data, which avoids the process that the M2M platform performs encryption and decryption on the large amount of report data for many times, and significantly reduces the operational overhead of decryption and encryption of the M2M platform when the report data of the data sending end is forwarded, thereby improving the performance of the M2M platform. Moreover, when the data sending end reports a small amount of data, the data sending end adopts the symmetric key encryption manner featuring simple operation to encrypt and decrypt the report data, so as to reduce the operational consumption of the terminal and extend the duration of use of the battery.

Moreover, in the embodiment of the present invention, the key negotiated by the data sending end and the M2M platform is a session key, and the key negotiated by the M2M platform and the data receiving end may also be a session key, which avoids the disadvantages that a conventional KEM-DEM method where an asymmetric key encryption technology is adopted to encrypt the data key has high requirements on the operational capability of the terminal and increases the operational consumption, thereby reducing energy consumption of the terminal and extending the duration of use of the battery.

### Embodiment 3

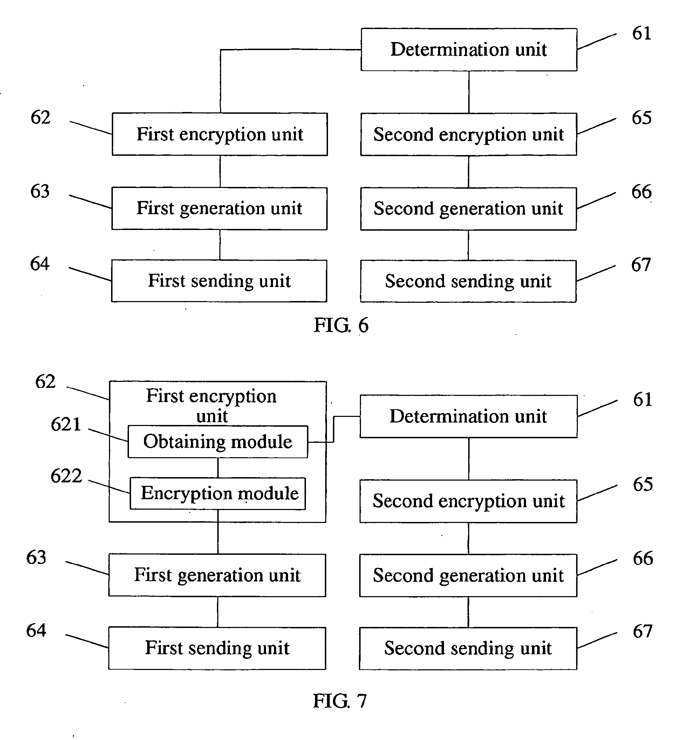

An embodiment of the present invention provides a data sending end. As shown in FIG. 6, the data sending end includes a determination unit 61, a first encryption unit 62, a first generation unit 63, a first sending unit 64, a second encryption unit 65, a second generation unit 66 and a second sending unit 67.

The determination unit 61 is configured to determine whether a data amount of report data exceeds a set threshold, where the set threshold may be determined according to a size of a key and an actual processing capability of a terminal, which is not limited in the embodiment of the present invention. When the determination unit 61 determines that the data amount of the report data exceeds the set threshold, the first encryption unit 62 is configured to encrypt the data that needs to be reported in a KEM-DEM manner; the first generation unit 63 is configured to generate a report packet by using the encrypted report data which is obtained through encryption by the first encryption unit 62; and the first sending unit 64 is configured to send the report packet generated by the first generation unit 63 to an M2M platform, where the report packet includes data encryption manner indication information for indicating to the M2M platform that the data sending end adopts the KEM-DEM manner to encrypt the report data. The KEM-DEM manner refers to that the report data of the data sending end and other information that needs to be encrypted are encrypted separately.

When the determination unit 61 determines that the data amount of the report data does not exceed the set threshold, the second encryption unit 65 is configured to encrypt the report data by using a key negotiated by the data sending end and the M2M platform, where the key negotiated by the data sending end and the M2M platform for encrypting the data may be a session key; the second generation unit 66 is configured to generate a report packet by using the encrypted report data obtained by the second encryption unit 65; and the second sending unit 67 is configured to send the report packet generated by the second generation unit 66 to the M2M platform, where the report packet includes data encryption manner indication information for indicating to the M2M platform that the data sending end adopts the symmetric key manner to encrypt the report data.

As shown in FIG. 7, the first encryption unit 62 includes: an obtaining module 621 and an encryption module 622.

The obtaining module 621 is configured to obtain a data key for encrypting the report data. The encryption module 622 is configured to use the data key to encrypt the report data, and use the key negotiated by the data sending end and the M2M platform to encrypt the data key, where the key negotiated by the data sending end and the M2M platform for encrypting the data key may be a session key. The first generation unit 63 is further configured to use the report data encrypted by the encryption module 622 and the encrypted data key to generate a report packet.

The data key, which is for encrypting the report data of the data sending end and obtained by the obtaining module 621, may be randomly generated through a random password generation mechanism or may be manually set, which is not limited in the embodiment of the present invention. As long as the data key for encrypting the report data of the data sending end may be obtained, any method may be used in the embodiment of the present invention. The key negotiated by the data sending end with the M2M platform is a session key.

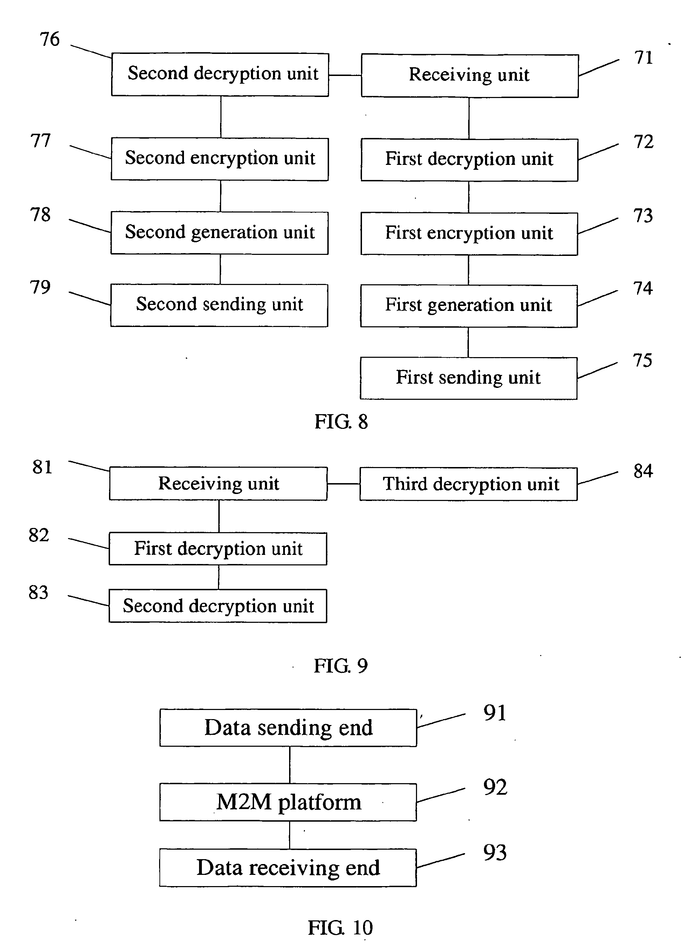

An embodiment of the present invention provides an M2M platform. As shown in FIG. 8, the platform includes: a receiving unit 71, a first decryption unit 72, a first encryption unit 73, a first generation unit 74, a first sending unit 75, a second decryption unit 76, a second encryption unit 77, a second generation unit 78 and a second sending unit 79.

The receiving unit 71 is configured to receive a report packet sent by a data sending end, where the report packet includes data encryption manner indication information for indicating to the M2M platform whether the data sending end adopts a KEM-DEM manner or a symmetric key manner to encrypt report data of the data sending end.

When it is determined, according to the data encryption manner indication information, that the data sending end adopts the KEM-DEM manner to encrypt the report data of the data sending end, the first decryption unit 72 is configured to separate an encrypted data key and the encrypted report data from the report packet received by the receiving unit 71, and decrypt the encrypted data key by using a key negotiated by the data sending end with the M2M platform, to obtain the data key, where the key negotiated by the data sending end with the M2M platform may be a session key; the first encryption unit 73 is configured to encrypt, by using a key negotiated by the M2M platform with a data receiving end, the data key obtained through decryption by the first decryption unit 72, where the key negotiated by the M2M platform with the data receiving end may be a session key; the first generation unit 74 is configured to generate a delivery packet by using the encrypted data key obtained by the first encryption unit 73 and the encrypted report data separated by the first decryption unit 72 ; and the first sending unit 75 is configured to send the delivery packet generated by the first generation unit 74 to the data receiving end, where the delivery packet includes data encryption manner indication information for indicating to the data receiving end that the M2M platform adopts the KEM-DEM manner to encrypt the report data of the data sending end.

When it is determined, according to the data encryption manner indication information, that the data sending end adopts the symmetric key manner to encrypt the report data of the data sending end, the second decryption unit 76 is configured to decrypt, by using the key negotiated by the data sending end with the M2M platform, the encrypted report data included in the report packet received by the receiving unit, to obtain the report data, where the key negotiated by the data sending end with the M2M platform may be a session key; the second encryption unit 77 is configured to encrypt, by using the key negotiated by the M2M platform with the data receiving end, the report data obtained through decryption by the second decryption unit 76, where the key negotiated by the M2M platform with the data receiving end may be a session key; the second generation unit 78 is configured to generate a delivery packet by using the encrypted report data obtained by the second encryption unit 77; and the second sending unit 79 is configured to send the delivery packet generated by the second generation unit 78 to the data receiving end, where the delivery packet includes data encryption manner indication information for indicating to the data receiving end that the M2M platform adopts the symmetric key manner to encrypt the report data of the data sending end.

An embodiment of the present invention provides a data receiving end. As shown in FIG 9, the data receiving end includes a receiving unit 81, a first decryption unit 82, a second decryption unit 83 and a third decryption unit 84.

The receiving unit 81 is configured to receive a delivery packet sent by an M2M platform, where the delivery packet includes data encryption manner indication information for indicating to a data receiving end whether the M2M platform adopts a KEM-DEM manner or a symmetric key manner to encrypt report data of a data sending end.

When it is determined, according to the data encryption manner indication information, that the M2M platform adopts the KEM-DEM manner to encrypt the report data of the data sending end, the first decryption unit 82 is configured to decrypt, by using a key negotiated by the M2M platform with the data receiving end, an encrypted data key included in the delivery packet received by the receiving unit 81, to obtain the data key; the second decryption unit 83 is configured to decrypt, by using the data key obtained through decryption by the first decryption unit 82, the data that is encrypted by using the data key and included in the delivery packet received by the receiving unit 81, to obtain the report data sent by the data sending end. The key negotiated by the M2M platform with the data receiving end may be a session key.

When it is determined, according to the data encryption manner indication information, that the M2M platform adopts the symmetric key manner to encrypt the report data of the data sending end, the third decryption unit 84 is configured to decrypt, by using the key negotiated by the M2M platform with the data receiving end, encrypted report data included in the delivery packet received by the receiving unit 81, to obtain the report data sent by the data sending end. The key negotiated by the M2M platform with the data receiving end may be a session key.

An embodiment of the present invention provides a system for data encryption and transmission in M2M. As shown in FIG. 10, the system includes a data sending end 91, an M2M platform 92 and a data receiving end 93.

The data sending end 91 is configured to, determine whether a data amount of report data exceeds a set threshold; if it is determined that the data amount of the report data exceeds the set threshold, encrypt the report data in a KEM-DEM manner, generate a report packet, and send the report packet to the M2M platform 92, where the report packet includes data encryption manner indication information for indicating to the M2M platform that the data sending end adopts the KEM-DEM manner to encrypt the report data; and if it is determined that the data amount of the report data does not exceed the set threshold, encrypt the report data by using a key negotiated by the data sending end with the M2M platform, generate a report packet, and send the report packet to the M2M platform 92, where the report packet includes data encryption manner indication information for indicating to the M2M platform that the data sending end adopts a symmetric key manner to encrypt the report data.

The M2M platform 92 is configured to, receive a report packet sent by the data sending end 91, where the report packet includes data encryption manner indication information for indicating to the M2M platform whether the data sending end 91 adopts the KEM-DEM manner or the symmetric key manner to encrypt the report data of the data sending end; if it is determined that the data sending end 91 adopts the KEM-DEM manner to encrypt the report data of the data sending end, separate an encrypted data key and the encrypted report data from the report packet, and decrypt the encrypted data key by using the key negotiated by the data sending end 91 with the M2M platform 92, to obtain the data key; and encrypt the data key by using a key negotiated by the M2M platform 92 with the data receiving end 93, generate a delivery packet by using the encrypted data key and the encrypted report data, and send the delivery packet to the data receiving end 93, where the delivery packet includes data encryption manner indication information for indicating to the data receiving end that the M2M platform 92 adopts the KEM-DEM manner to encrypt the report data of the data sending end; and if it is determined that the data sending end 91 adopts the symmetric key manner to encrypt the data, decrypt the encrypted report data included in the report packet by using the key negotiated by the data sending end 91 with the M2M platform 92, to obtain the report data; and encrypt the report data by using the key negotiated by the M2M platform 92 with the data receiving end 93, generate a delivery packet, and send the delivery packet to the data receiving end 93, where the delivery packet includes data encryption manner indication information for indicating to the data receiving end that the M2M platform 92 adopts the symmetric key manner to encrypt the report data of the data sending end.

The data receiving end 93 is configured to receive a delivery packet sent by the M2M platform 92, where the delivery packet includes data encryption manner indication information for indicating to the data receiving end whether the M2M platform 92 adopts the KEM-DEM manner or the symmetric key manner to encrypt the report data of the data sending end; if it is determined that the M2M platform 92 adopts the KEM-DEM manner to encrypt the report data of the data sending end, decrypt an encrypted data key included in the delivery packet by using the key negotiated by the M2M platform 92 with the data receiving end 93, to obtain the data key; and decrypt, by using the data key, the data that is encrypted by using the data key and included in the delivery packet, to obtain the report data sent by the data sending end; and if it is determined that the M2M platform 92 adopts the symmetric key manner to encrypt the report data of the data sending end, decrypt the encrypted report data included in the delivery packet by using the key negotiated by the M2M platform 92 with the data receiving end 93, to obtain the report data of the data sending end.

In the embodiment of the present invention, when the data sending end needs to send the report data to the data receiving end, the data sending end first determines, according to the data amount of the report data, which encryption manner is to be adopted to encrypt the data that needs to be reported. When the data sending end sends a large amount of report data, the data sending end adopts the KEM-DEM manner to encrypt the report data. Because in the KEM-DEM encryption manner, the report data is encrypted once at the data sending end, the encrypted report data is only decrypted at the data receiving end, and the M2M platform only encrypts and decrypts the data key for encrypting the report data, which avoids the process that the M2M platform performs encryption and decryption on the large amount of report data for many times, and significantly reduces the operational overhead of decryption and encryption of the M2M platform when the report data of the data sending end is forwarded, thereby improving the performance of the M2M platform. Moreover, when the data sending end reports a small amount of data, the data sending end adopts the symmetric key encryption manner featuring simple operation to encrypt and decrypt the report data, so as to reduce the operational consumption of the terminal and extend the duration of use of the battery.

Moreover, in the embodiment of the present invention, the key negotiated by the data sending end and the M2M platform is a session key, and the key negotiated by the M2M platform and the data receiving end may also be a session key, which avoids the disadvantages that a conventional KEM-DEM method where an asymmetric key encryption technology is adopted to encrypt the data key has high requirements on the operational capability of the terminal and increases the operational consumption, thereby reducing energy consumption of the terminal.

Through the description of the preceding embodiments, persons skilled in the art may clearly understand that the present invention may be implemented by software plus necessary universal hardware, and definitely may also be implemented by hardware, but in many cases, the former is a preferred implementation manner. Based on such understanding, the technical solutions of the present invention or the part that makes contributions to the prior art may be substantially embodied in a form of a software product. The computer software product may be stored in a computer readable storage medium such as a floppy disk, a hard disk or an optical disk of a computer, and includes several instructions to instruct a computer device (for example, a personal computer, a server, or a network device, and so on) to execute the method described in the embodiments of the present invention.

The above descriptions are merely exemplary embodiments of the present invention, which however do not limit the protection scope of the present invention. Any modification, equivalent replacement, or improvement made by persons skilled in the art within the technical scope disclosed in the present invention shall fall within the protection scope of the present invention. Therefore, the protection scope of the present invention is subject to the protection scope of the claims.

## Claims

1. A method for data encryption and transmission for use in Machine-to-Machine, M2M, comprising:
determining(101), by a data sending end, whether a data amount of report data exceeds a set threshold;
if it is determined that the data amount of the report data exceeds the set threshold, encrypting(102), by the data sending end, the report data in a KEM-DEM manner, generating a report packet, and sending the report packet to an M2M platform, wherein the report packet comprises data encryption manner indication information for indicating to the M2M platform that the data sending end adopts the KEM-DEM manner to encrypt the report data, wherein the KEM-DEM manner refers to that the report data of the data sending end and other information, which needs to be encrypted, are encrypted separately; and
if it is determined that the data amount of the report data does not exceed the set threshold, encrypting(103), by the data sending end, the report data by using a key negotiated by the data sending end with the M2M platform, generating a report packet, and sending the report packet to the M2M platform, wherein the report packet comprises data encryption manner indication information for indicating to the M2M platform that the data sending end adopts a symmetric key manner to encrypt the report data.

2. The method according to claim 1, wherein the encrypting the report data in the KEM-DEM manner, generating the report packet and sending the report packet to the M2M platform comprises:
obtaining a data key for encrypting the report data;
using the data key to encrypt the report data, and using a key negotiated by the data sending end with the M2M platform to encrypt the data key; and
generating a report packet by using encrypted report data and an encrypted data key, and sending the report packet to the M2M platform.

3. The method according to claim 1 or 2, wherein the key negotiated by the data sending end with the M2M platform is a session key.

4. A method for data encryption and transmission for use in M2M, comprising:
receiving(201), by a M2M platform, a report packet sent by a data sending end, wherein the report packet comprises data encryption manner indication information for indicating to an M2M platform whether the data sending end adopts a KEM-DEM manner or a symmetric key manner to encrypt report data of the data sending end, wherein the KEM-DEM manner refers to that the report data of the data sending end and other information, which needs to be encrypted, are encrypted separately;
if it is determined that the data sending end adopts the KEM-DEM manner to encrypt the report data of the data sending end, separating(203), by the M2M platform, an encrypted data key and encrypted report data from the report packet, and decrypting the encrypted data key by using a key negotiated by the data sending end with the M2M platform, to obtain a data key; and
encrypting(204), by the M2M platform, the data key by using a key negotiated by the M2M platform with a data receiving end, generate a delivery packet by using the encrypted data key and the encrypted report data, and sending the delivery packet to the data receiving end, wherein the delivery packet comprises data encryption manner indication information for indicating to the data receiving end that the M2M platform adopts the KEM-DEM manner to encrypt the report data of the data sending end; and
if it is determined that the data sending end adopts the symmetric key manner to encrypt the report data of the data sending end, decrypting(205), by the M2M platform, the encrypted report data comprised in the report packet by using the key negotiated by the data sending end with the M2M platform, to obtain the report data; and
encrypting(206), by the M2M platform, the report data by using the key negotiated by the M2M platform with the data receiving end, generating a delivery packet, and sending the delivery packet to the data receiving end, wherein the delivery packet comprises data encryption manner indication information for indicating to the data receiving end that the M2M platform adopts the symmetric key manner to encrypt the report data of the data sending end.

5. The method according to claim 4, wherein,
the key negotiated by the data sending end with the M2M platform is a session key; and
the key negotiated by the M2M platform with the data receiving end is a session key.

6. A method for data encryption and transmission, comprising:
receiving(301), by a data receiving end, a delivery packet sent by an M2M platform, wherein the delivery packet comprises data encryption manner indication information for indicating to a data receiving end whether the M2M platform adopts a KEM-DEM manner or a symmetric key manner to encrypt report data of a data sending end, wherein the KEM-DEM manner refers to that the report data of the data sending end and other information, which needs to be encrypted, are encrypted separately;
if it is determined that the M2M platform adopts the KEM-DEM manner to encrypt the report data of the data sending end, decrypting(303), by the data receiving end, an encrypted data key comprised in the delivery packet by using a key negotiated by the M2M platform with the data receiving end, to obtain a data key; and decrypting, by using the data key, report data that is encrypted by using the data key and comprised in the delivery packet, to obtain report data sent by the data sending end; and
if it is determined that the M2M platform adopts the symmetric key manner to encrypt the report data of the data sending end, decrypting(304), by the data receiving end, encrypted report data comprised in the delivery packet by using the key negotiated by the M2M platform with the data receiving end, to obtain the report data sent from the data sending end.

7. The method according to claim 6, wherein the key negotiated by the M2M platform with the data receiving end is a session key.

8. A data sending end, comprising:
a determination unit(61), configured to determine whether a data amount of report data exceeds a set threshold;
a first encryption unit(62), configured to encrypt the report data in a KEM-DEM manner when the determination unit determines that the data amount of the report data exceeds the set threshold, wherein the KEM-DEM manner refers to that the report data of the data sending end and other information, which needs to be encrypted, are encrypted separately;
a first generation unit(63), configured to generate a report packet by using encrypted report data obtained through encryption by the first encryption unit; a first sending unit(64), configured to send the report packet generated by the first generation unit to an M2M platform, wherein the report packet comprises data encryption manner indication information for indicating to the M2M platform that the data sending end adopts the KEM-DEM manner to encrypt the report data;
a second encryption unit(65), configured to: when the determination unit determines that the data amount of the report data does not exceed the set threshold, encrypt the report data by using a key negotiated by the data sending end with the M2M platform;
a second generation unit(66), configured to generate a report packet by using the encrypted report data obtained by the second encryption unit; and a second sending unit, configured to send the report packet generated by the second generation unit to the M2M platform, wherein the report packet comprises data encryption manner indication information for indicating to the M2M platform that the data sending end adopts a symmetric key manner to encrypt the report data.

9. The data sending end according to claim 8, wherein the first encryption unit comprises:
an obtaining module, configured to obtain a data key for encrypting the report data; and
an encryption module, configured to use the data key obtained by the obtaining module to encrypt the report data, and use a key negotiated by the data sending end with the M2M platform to encrypt the data key.

10. An M2M platform, comprising:
a receiving unit(71), configured to receive a report packet sent by a data sending end, wherein the report packet comprises data encryption manner indication information for indicating to the M2M platform whether the data sending end adopts a KEM-DEM manner or a symmetric key manner to encrypt report data of the data sending end, wherein the KEM-DEM manner refers to that the report data of the data sending end and other information, which needs to be encrypted, are encrypted separately;
a first decryption unit(72), configured to, if it is determined that the data sending end adopts the KEM-DEM manner to encrypt the report data of the data sending end, separate an encrypted data key and encrypted report data from the report packet received by the receiving unit, and decrypt the encrypted data key by using a key negotiated by the data sending end with the M2M platform, to obtain a data key;
a first encryption unit(73), configured to encrypt, by using a key negotiated by the M2M platform with a data receiving end, the data key obtained through decryption by the first decryption unit; a first generation unit(74), configured to generate a delivery packet by using the encrypted data key obtained by the first encryption unit and the encrypted report data separated by the first decryption unit ;a first sending unit(75), configured to send the delivery packet generated by the first generation unit to the data receiving end, wherein the delivery packet comprises data encryption manner indication information for indicating to the data receiving end that the M2M platform adopts the KEM-DEM manner to encrypt the report data of the data sending end;
a second decryption unit(76), configured to, if it is determined that the data sending end adopts the symmetric key manner to encrypt the report data of the data sending end, decrypt, by using the key negotiated by the data sending end with the M2M platform, the encrypted report data comprised in the report packet received by the receiving unit, to obtain the report data;
a second encryption unit(77), configured to encrypt, by using the key negotiated by the M2M platform with the data receiving end, the report data obtained through decryption by the second decryption unit;
a second generation unit(78), configured to generate a delivery packet by using the encrypted report data obtained by the second encryption unit; and
a second sending unit(79), configured to send the delivery packet generated by the second generation unit to the data receiving end, wherein the delivery packet comprises data encryption manner indication information for indicating to the data receiving end that the M2M platform adopts the symmetric key manner to encrypt the report data of the data sending end.

11. A data receiving end, comprising:
a receiving unit(81), configured to receive a delivery packet sent by an M2M platform, wherein the delivery packet comprises data encryption manner indication information for indicating to the data receiving end whether the M2M platform adopts a KEM-DEM manner or a symmetric key manner to encrypt report data of a data sending end, wherein the KEM-DEM manner refers to that the report data of the data sending end and other information, which needs to be encrypted, are encrypted separately;
a first decryption unit(82), configured to: if it is determined that the M2M platform adopts the KEM-DEM manner to encrypt the report data of the data sending end, decrypt, by using a key negotiated by the M2M platform with the data receiving end, an encrypted data key comprised in the delivery packet received by the receiving unit, to obtain a data key;
a second decryption unit(83), configured to decrypt, by using the data key obtained through decryption by the first decryption unit, the report data that is encrypted by using the data key and comprised in the delivery packet received by the receiving unit, to obtain the report data sent by the data sending end; and
a third decryption unit(84), configured to: if it is determined that the M2M platform adopts the symmetric key manner to encrypt the report data of the data sending end, decrypt, by using the key negotiated by the M2M platform with the data receiving end, encrypted report data comprised in the delivery packet received by the receiving unit, to obtain the report data sent by the data sending end.

12. A system for data encryption and transmission in M2M, comprising:
a data sending end(91), configured to: determine whether a data amount of report data exceeds a set threshold; if it is determined that the data amount of the report data exceeds the set threshold, encrypt the report data in a KEM-DEM manner, wherein the KEM-DEM manner refers to that the report data of the data sending end and other information, which needs to be encrypted, are encrypted separately, generate a report packet, and send the report packet to an M2M platform, wherein the report packet comprises data encryption manner indication information for indicating to the M2M platform that the data sending end adopts the KEM-DEM manner to encrypt the report data; and if it is determined that the data amount of the report data does not exceed the set threshold, encrypt the report data by using a key negotiated by the data sending end with the M2M platform, generate a report packet, and send the report packet to the M2M platform, wherein the report packet comprises data encryption manner indication information for indicating to the M2M platform that the data sending end adopts a symmetric key manner to encrypt the report data;
the M2M platform(92), configured to: receive a report packet sent by the data sending end, wherein the report packet comprises data encryption manner indication information for indicating to the M2M platform whether the data sending end adopts the KEM-DEM manner or the symmetric key manner to encrypt the report data of the data sending end; if it is determined that the data sending end adopts the KEM-DEM manner to encrypt the report data of the data sending end, separate an encrypted data key and encrypted report data from the report packet, and decrypt the encrypted data key by using the key negotiated by the data sending end with the M2M platform, to obtain a data key; and encrypt the data key by using a key negotiated by the M2M platform with a data receiving end, generate a delivery packet by using the encrypted data key and the encrypted report data, and send the delivery packet to the data receiving end, wherein the delivery packet comprises data encryption manner indication information for indicating to the data receiving end that the M2M platform adopts the KEM-DEM manner to encrypt the report data of the data sending end; and if it is determined that the data sending end adopts the symmetric key manner to encrypt the report data of the data sending end, decrypt the encrypted report data comprised in the report packet by using the key negotiated by the data sending end with the M2M platform, to obtain the report data; and encrypt the report data by using the key negotiated by the M2M platform with the data receiving end, generate a delivery packet, and send the delivery packet to the data receiving end, wherein the delivery packet comprises data encryption manner indication information for indicating to the data receiving end that the M2M platform adopts the symmetric key manner to encrypt the report data of the data sending end; and
the data receiving end(93), configured to receive a delivery packet sent by the M2M platform, wherein the delivery packet comprises data encryption manner indication information for indicating to the data receiving end whether the M2M platform adopts the KEM-DEM manner or the symmetric key manner to encrypt the report data of the data sending end; if it is determined that the M2M platform adopts the KEM-DEM manner to encrypt the report data of the data sending end, decrypt an encrypted data key comprised in the delivery packet by using the key negotiated by the M2M platform with the data receiving end, to obtain the data key; and decrypt, by using the data key, the report data that is encrypted by using the data key and comprised in the delivery packet, to obtain the report data sent by the data sending end; and if it is determined that the M2M platform adopts the symmetric key manner to encrypt the report data of the data sending end, decrypt the encrypted report data comprised in the delivery packet by using the key negotiated by the M2M platform with the data receiving end, to obtain the report data sent by the data sending end.

## Patentansprüche

1. Verfahren zur Datenverschlüsselung und -übertragung zur Verwendung in Maschinezu-Maschine ("Machine-to-Machine", M2M), umfassend:
Bestimmen (101), durch eine Datensendeseite, ob eine Datenmenge von Berichtdaten einen eingestellten Schwellwert überschreitet;
falls bestimmt wird, dass die Datenmenge der Berichtdaten den eingestellten Schwellwert überschreitet, Verschlüsseln (102), durch die Datensendeseite, der Berichtdaten mit einer KEM-DEM-Methode, Erzeugen eines Berichtpakets und Senden des Berichtpakets an eine M2M-Plattform, wobei das Berichtpaket Informationen zum Anzeigen der Datenverschlüsselungsmethode umfasst, um der M2M-Plattform anzuzeigen, dass die Datensendeseite die KEM-DEM-Methode anwendet, um die Berichtdaten zu verschlüsseln, wobei die KEM-DEM-Methode bedeutet, dass die Berichtdaten der Datensendeseite und weitere Informationen, die verschlüsselt werden müssen, getrennt verschlüsselt werden; und
falls bestimmt wird, dass die Datenmenge der Berichtdaten den eingestellten Schwellwert nicht überschreitet, Verschlüsseln (103), durch die Datensendeseite, der Berichtdaten unter Verwendung eines Schlüssels, der durch die Datensendeseite mit der M2M-Plattform ausgehandelt wird, Erzeugen eines Berichtpakets und Senden des Berichtpakets an die M2M-Plattform, wobei das Berichtpaket Informationen zum Anzeigen der Datenverschlüsselungsmethode umfasst, um der M2M-Plattform anzuzeigen, dass die Datensendeseite eine Methode mit symmetrischem Schlüssel anwendet, um die Berichtdaten zu verschlüsseln.

2. Verfahren nach Anspruch 1, wobei das Verschlüsseln der Berichtdaten mit der KEM-DEM-Methode, das Erzeugen des Berichtpakets und das Senden des Berichtpakets an die M2M-Plattform umfassen:
Gewinnen eines Datenschlüssels zum Verschlüsseln der Berichtdaten;
Verwenden des Datenschlüssels, um die Berichtdaten zu verschlüsseln, und Verwenden eines Schlüssels, der durch die Datensendeseite mit der M2M-Plattform ausgehandelt wird, um den Datenschlüssel zu verschlüsseln; und
Erzeugen eines Berichtpakets unter Verwendung verschlüsselter Berichtdaten und eines verschlüsselten Datenschlüssels und Senden des Berichtpakets an die M2M-Plattform.

3. Verfahren nach Anspruch 1 oder 2, wobei der Schlüssel, der durch die Datensendeseite mit der M2M-Plattform ausgehandelt wird, ein Sitzungsschlüssel ist.

4. Verfahren zur Datenverschlüsselung und -übertragung zur Verwendung in M2M, umfassend:
Empfangen (201), durch eine M2M-Plattform, eines Berichtpakets, das durch eine Datensendeseite gesendet wird, wobei das Berichtpaket Informationen zum Anzeigen der Datenverschlüsselungsmethode umfasst, um einer M2M-Plattform anzuzeigen, ob die Datensendeseite eine KEM-DEM-Methode oder eine Methode mit symmetrischem Schlüssel anwendet, um Berichtdaten der Datensendeseite zu verschlüsseln, wobei die KEM-DEM-Methode bedeutet, dass die Berichtdaten der Datensendeseite und weitere Informationen, die verschlüsselt werden müssen, getrennt verschlüsselt werden;
falls bestimmt wird, dass die Datensendeseite die KEM-DEM-Methode anwendet, um die Berichtdaten der Datensendeseite zu verschlüsseln, Trennen (203), durch die M2M-Plattform, eines verschlüsselten Datenschlüssels und verschlüsselter Berichtdaten von dem Berichtpaket und Entschlüsseln des verschlüsselten Datenschlüssels unter Verwendung eines Schlüssels, der durch die Datensendeseite mit der M2M-Plattform ausgehandelt wird, um einen Datenschlüssel zu gewinnen; und
Verschlüsseln (204), durch die M2M-Plattform, des Datenschlüssels unter Verwendung eines Schlüssels, der durch die M2M-Plattform mit einer Datenempfangsseite ausgehandelt wird, Erzeugen eines Übermittlungspakets unter Verwendung des verschlüsselten Datenschlüssels und der verschlüsselten Berichtdaten und Senden des Übermittlungspakets an die Datenempfangsseite, wobei das Übermittlungspaket Anzeigeinformationen zum Anzeigen der Datenverschlüsselungsmethode umfasst, um der Datenempfangsseite anzuzeigen, dass die M2M-Plattform die KEM-DEM-Methode anwendet, um die Berichtdaten der Datensendeseite zu verschlüsseln; und
falls bestimmt wird, dass die Datensendeseite die Methode mit symmetrischem Schlüssel anwendet, um die Berichtdaten der Datensendeseite zu verschlüsseln, Entschlüsseln (205), durch die M2M-Plattform, der verschlüsselten Berichtdaten, die das Berichtpaket umfasst, unter Verwendung des Schlüssels, der durch die Datensendeseite mit der M2M-Plattform ausgehandelt wird, um die Berichtdaten zu gewinnen; und
Verschlüsseln (206), durch die M2M-Plattform, der Berichtdaten unter Verwendung des Schlüssels, der durch die M2M-Plattform mit der Datenempfangsseite ausgehandelt wird, Erzeugen eines Übermittlungspakets und Senden des Übermittlungspakets an die Datenempfangsseite, wobei das Übermittlungspaket Informationen zum Anzeigen der Datenverschlüsselungsmethode umfasst, um der Datenempfangsseite anzuzeigen, dass die M2M-Plattform die Methode mit symmetrischem Schlüssel anwendet, um die Berichtdaten der Datensendeseite zu verschlüsseln.

5. Verfahren nach Anspruch 4, wobei
der Schlüssel, der durch die Datensendeseite mit der M2M-Plattform ausgehandelt wird, ein Sitzungsschlüssel ist; und
der Schlüssel, der durch die M2M-Plattform mit der Datenempfangsseite ausgehandelt wird, ein Sitzungsschlüssel ist.

6. Verfahren zur Datenverschlüsselung und -übertragung, umfassend:
Empfangen (301), durch eine Datenempfangsseite, eines Übermittlungspakets, das durch eine M2M-Plattform gesendet wird, wobei das Übermittlungspaket Informationen zum Anzeigen der Datenverschlüsselungsmethode umfasst, um einer Datenempfangsseite anzuzeigen, ob die M2M-Plattform eine KEM-DEM-Methode oder eine Methode mit symmetrischem Schlüssel anwendet, um Berichtdaten einer Datensendeseite zu verschlüsseln, wobei die KEM-DEM-Methode bedeutet, dass die Berichtdaten der Datensendeseite und weitere Informationen, die verschlüsselt werden müssen, getrennt verschlüsselt werden;
falls bestimmt wird, dass die M2M-Plattform die KEM-DEM-Methode anwendet, um die Berichtdaten der Datensendeseite zu verschlüsseln, Entschlüsseln (303), durch die Datenempfangsseite, eines verschlüsselten Datenschlüssels, den das Übermittlungspaket umfasst, unter Verwendung eines Schlüssels, der durch die M2M-Plattform mit der Datenempfangsseite ausgehandelt wird, um einen Datenschlüssel zu gewinnen; und Entschlüsseln, unter Verwendung des Datenschlüssels, von Berichtdaten, die unter Verwendung des Datenschlüssels verschlüsselt sind und die das Übermittlungspaket umfasst, um durch die Datensendeseite gesendete Berichtdaten zu gewinnen; und
falls bestimmt wird, dass die M2M-Plattform die Methode mit symmetrischem Schlüssel anwendet, um die Berichtdaten der Datensendeseite zu verschlüsseln, Entschlüsseln (304), durch die Datenempfangsseite, der verschlüsselten Berichtdaten, die das Übermittlungspaket umfasst, unter Verwendung des Schlüssels, der durch die M2M-Plattform mit der Datenempfangsseite ausgehandelt wird, um die von der Datensendeseite gesendeten Berichtdaten zu gewinnen.

7. Verfahren nach Anspruch 6, wobei der Schlüssel, der durch die M2M-Plattform mit der Datenempfangsseite ausgehandelt wird, ein Sitzungsschlüssel ist.

8. Datensendeseite, umfassend:
eine Bestimmungseinheit (61), die dafür ausgelegt ist, zu bestimmen, ob eine Datenmenge von Berichtdaten einen eingestellten Schwellwert überschreitet;
eine erste Verschlüsselungseinheit (62), die dafür ausgelegt ist, die Berichtdaten mit einer KEM-DEM-Methode zu verschlüsseln, wenn die Bestimmungseinheit bestimmt, dass die Datenmenge der Berichtdaten den eingestellten Schwellwert überschreitet, wobei die KEM-DEM-Methode bedeutet, dass die Berichtdaten der Datensendeseite und weitere Informationen, die verschlüsselt werden müssen, getrennt verschlüsselt werden;
eine erste Erzeugungseinheit (63), die dafür ausgelegt ist, ein Berichtpaket zu erzeugen unter Verwendung verschlüsselter Berichtdaten, die durch Verschlüsseln durch die erste Verschlüsselungseinheit gewonnen werden; eine erste Sendeeinheit (64), die dafür ausgelegt ist, das durch die erste Erzeugungseinheit erzeugte Berichtpaket an eine M2M-Plattform zu senden, wobei das Berichtpaket Informationen zum Anzeigen der Datenverschlüsselungsmethode umfasst, um der M2M-Plattform anzuzeigen, dass die Datensendeseite die KEM-DEM-Methode anwendet, um die Berichtdaten zu verschlüsseln;
eine zweite Verschlüsselungseinheit (65), die dafür ausgelegt ist: wenn die Bestimmungseinheit bestimmt, dass die Datenmenge der Berichtdaten den eingestellten Schwellwert nicht überschreitet, die Berichtdaten unter Verwendung eines Schlüssels, der durch die Datensendeseite mit der M2M-Plattform ausgehandelt wird, zu verschlüsseln;
eine zweite Erzeugungseinheit (66), die dafür ausgelegt ist, ein Berichtpaket zu erzeugen unter Verwendung der verschlüsselten Berichtdaten, die durch die zweite Verschlüsselungseinheit gewonnen werden; und eine zweite Sendeeinheit, die dafür ausgelegt ist, das durch die zweite Erzeugungseinheit erzeugte Berichtpaket an die M2M-Plattform zu senden, wobei das Berichtpaket Informationen zum Anzeigen der Datenverschlüsselungsmethode umfasst, um der M2M-Plattform anzuzeigen, dass die Datensendeseite eine Methode mit symmetrischem Schlüssel anwendet, um die Berichtdaten zu verschlüsseln.

9. Datensendeseite nach Anspruch 8, wobei die erste Verschlüsselungseinheit umfasst:
ein Gewinnungsmodul, das dafür ausgelegt ist, einen Datenschlüssel zum Verschlüsseln der Berichtdaten zu gewinnen; und
ein Verschlüsselungsmodul, das dafür ausgelegt ist, den durch das Gewinnungsmodul gewonnenen Datenschlüssel zu verwenden, um die Berichtdaten zu verschlüsseln, und einen Schlüssel zu verwenden, der durch die Datensendeseite mit der M2M-Plattform ausgehandelt wird, um den Datenschlüssel zu verschlüsseln.

10. M2M-Plattform, umfassend:
eine Empfangseinheit (71), die dafür ausgelegt ist, ein Berichtpaket zu empfangen, das durch eine Datensendeseite gesendet wird, wobei das Berichtpaket Informationen zum Anzeigen der Datenverschlüsselungsmethode umfasst, um der M2M-Plattform anzuzeigen, ob die Datensendeseite eine KEM-DEM-Methode oder eine Methode mit symmetrischem Schlüssel anwendet, um Berichtdaten der Datensendeseite zu verschlüsseln, wobei die KEM-DEM-Methode bedeutet, dass die Berichtdaten der Datensendeseite und weitere Informationen, die verschlüsselt werden müssen, getrennt verschlüsselt werden;
eine erste Entschlüsselungseinheit (72), die dafür ausgelegt ist, falls bestimmt wird, dass die Datensendeseite die KEM-DEM-Methode anwendet, die Berichtdaten der Datensendeseite zu verschlüsseln, einen verschlüsselten Datenschlüssel und verschlüsselte Berichtdaten von dem durch die Empfangseinheit empfangenen Berichtpaket zu trennen und den verschlüsselten Datenschlüssel unter Verwendung eines Schlüssels, der durch die Datensendeseite mit der M2M-Plattform ausgehandelt wird, zu entschlüsseln, um einen Datenschlüssel zu gewinnen;
eine erste Verschlüsselungseinheit (73), die dafür ausgelegt ist, unter Verwendung eines Schlüssels, der durch die M2M-Plattform mit einer Datenempfangsseite ausgehandelt wird, den durch Entschlüsseln durch die erste Entschlüsselungseinheit gewonnenen Datenschlüssel zu verschlüsseln; eine erste Erzeugungseinheit (74), die dafür ausgelegt ist, ein Übermittlungspaket unter Verwendung des verschlüsselten Datenschlüssels, der durch die erste Verschlüsselungseinheit gewonnen wird, und der verschlüsselten Berichtdaten, die durch die erste Entschlüsselungseinheit getrennt werden, zu erzeugen; eine erste Sendeeinheit (75), die dafür ausgelegt ist, das durch die erste Erzeugungseinheit erzeugte Übermittlungspaket an die Datenempfangsseite zu senden, wobei das Übermittlungspaket Informationen zum Anzeigen der Datenverschlüsselungsmethode umfasst, um der Datenempfangsseite anzuzeigen, dass die M2M-Plattform die KEM-DEM-Methode anwendet, um die Berichtdaten der Datensendeseite zu verschlüsseln;
eine zweite Entschlüsselungseinheit (76), die dafür ausgelegt ist, falls bestimmt wird, dass die Datensendeseite die Methode mit symmetrischem Schlüssel anwendet, um die Berichtdaten der Datensendeseite zu verschlüsseln, unter Verwendung des Schlüssels, der durch die Datensendeseite mit der M2M-Plattform ausgehandelt wird, die verschlüsselten Berichtdaten zu entschlüsseln, die das Berichtpaket umfasst, das durch die Empfangseinheit empfangen wird, um die Berichtdaten zu gewinnen;
eine zweite Verschlüsselungseinheit (77), die dafür ausgelegt ist, unter Verwendung des Schlüssels, der durch die M2M-Plattform mit einer Datenempfangsseite ausgehandelt wird, die durch Entschlüsseln durch die zweite Entschlüsselungseinheit gewonnenen Berichtdaten zu verschlüsseln;
eine zweite Erzeugungseinheit (78), die dafür ausgelegt ist, ein Übermittlungspaket unter Verwendung der durch die zweite Verschlüsselungseinheit gewonnenen verschlüsselten Berichtdaten zu erzeugen; und
eine zweite Sendeeinheit (79), die dafür ausgelegt ist, das durch die zweite Erzeugungseinheit erzeugte Übermittlungspaket an die Datenempfangsseite zu senden, wobei das Übermittlungspaket Informationen zum Anzeigen der Datenverschlüsselungsmethode umfasst, um der Datenempfangsseite anzuzeigen, dass die M2M-Plattform die Methode mit symmetrischem Schlüssel anwendet, um die Berichtdaten der Datensendeseite zu verschlüsseln.

11. Datenempfangsseite, umfassend:
eine Empfangseinheit (81), die dafür ausgelegt ist, ein Übermittlungspaket, das durch eine M2M-Plattform gesendet wird, zu empfangen, wobei das Übermittlungspaket Informationen zum Anzeigen der Datenverschlüsselungsmethode umfasst, um der Datenempfangsseite anzuzeigen, ob die M2M-Plattform eine KEM-DEM-Methode oder eine Methode mit symmetrischem Schlüssel anwendet, um Berichtdaten einer Datensendeseite zu verschlüsseln, wobei die KEM-DEM-Methode bedeutet, dass die Berichtdaten der Datensendeseite und weitere Informationen, die verschlüsselt werden müssen, getrennt verschlüsselt werden;
eine erste Entschlüsselungseinheit (82), die dafür ausgelegt ist: falls bestimmt wird, dass die M2M-Plattform die KEM-DEM-Methode anwendet, um die Berichtdaten der Datensendeseite zu verschlüsseln, unter Verwendung eines Schlüssels, der durch die M2M-Plattform mit der Datensendeseite ausgehandelt wird, einen verschlüsselten Datenschlüssel zu entschlüsseln, den das Übermittlungspaket umfasst, das durch die Empfangseinheit empfangen wird, um einen Datenschlüssel zu gewinnen;
eine zweite Entschlüsselungseinheit (83), die dafür ausgelegt ist, unter Verwendung des Datenschlüssels, der durch Entschlüsseln durch die erste Entschlüsselungseinheit gewonnen wird, die Berichtdaten zu entschlüsseln, die unter Verwendung des Datenschlüssels verschlüsselt sind und die das durch die Empfangseinheit empfangene Übermittlungspaket umfasst, um die durch die Datensendeseite gesendeten Berichtdaten zu gewinnen; und
eine dritte Entschlüsselungseinheit (84), die dafür ausgelegt ist: falls bestimmt wird, dass die M2M-Plattform die Methode mit symmetrischem Schlüssel anwendet, um die Berichtdaten der Datensendeseite zu verschlüsseln, unter Verwendung des Schlüssels, der durch die M2M-Plattform mit der Datenempfangsseite ausgehandelt wird, verschlüsselte Berichtdaten zu entschlüsseln, die das durch die Empfangseinheit empfangene Übermittlungspaket umfasst, um die durch die Datensendeseite gesendeten Berichtdaten zu gewinnen.

12. System zur Datenverschlüsselung und -übertragung in M2M, umfassend:
eine Datensendeseite (91), die dafür ausgelegt ist: zu bestimmen, ob eine Datenmenge von Berichtdaten einen eingestellten Schwellwert überschreitet; falls bestimmt wird, dass die Datenmenge der Berichtdaten den eingestellten Schwellwert überschreitet, die Berichtdaten mit einer KEM-DEM-Methode zu verschlüsseln, wobei die KEM-DEM-Methode bedeutet, dass die Berichtdaten der Datensendeseite und weitere Informationen, die verschlüsselt werden müssen, getrennt verschlüsselt werden, ein Berichtpaket zu erzeugen und das Berichtpaket an eine M2M-Plattform zu senden, wobei das Berichtpaket Informationen zum Anzeigen der Datenverschlüsselungsmethode umfasst, um der M2M-Plattform anzuzeigen, dass die Datensendeseite die KEM-DEM-Methode anwendet, um die Berichtdaten zu verschlüsseln; und falls bestimmt wird, dass die Datenmenge der Berichtdaten den eingestellten Schwellwert nicht überschreitet, die Berichtdaten unter Verwendung eines Schlüssels, der durch die Datensendeseite mit der M2M-Plattform ausgehandelt wird, zu verschlüsseln, ein Berichtpaket zu erzeugen und das Berichtpaket an die M2M-Plattform zu senden, wobei das Berichtpaket Informationen zum Anzeigen der Datenverschlüsselungsmethode umfasst, um der M2M-Plattform anzuzeigen, dass die Datensendeseite eine Methode mit symmetrischem Schlüssel anwendet, um die Berichtdaten zu verschlüsseln;
die M2M-Plattform (92), die dafür ausgelegt ist: ein durch die Datensendeseite gesendetes Berichtpaket zu empfangen, wobei das Berichtpaket Informationen zum Anzeigen der Datenverschlüsselungsmethode umfasst, um der M2M-Plattform anzuzeigen, ob die Datensendeseite die KEM-DEM-Methode oder die Methode mit symmetrischem Schlüssel anwendet, um die Berichtdaten der Datensendeseite zu verschlüsseln; falls bestimmt wird, dass die Datensendeseite die KEM-DEM-Methode anwendet, um die Berichtdaten der Datensendeseite zu verschlüsseln, einen verschlüsselten Datenschlüssel und verschlüsselte Berichtdaten von dem Berichtpaket zu trennen und den verschlüsselten Datenschlüssel unter Verwendung des Schlüssels, der durch die Datensendeseite mit der M2M-Plattform ausgehandelt wird, zu entschlüsseln, um einen Datenschlüssel zu gewinnen; und den Datenschlüssel unter Verwendung eines Schlüssels, der durch die M2M-Plattform mit einer Datenempfangsseite ausgehandelt wird, zu verschlüsseln, ein Übermittlungspaket unter Verwendung des verschlüsselten Datenschlüssels und der verschlüsselten Berichtdaten zu erzeugen und das Übermittlungspaket an die Datenempfangsseite zu senden, wobei das Übermittlungspaket Informationen zum Anzeigen der Datenverschlüsselungsmethode umfasst, um der Datenempfangsseite anzuzeigen, dass die M2M-Plattform die KEM-DEM-Methode anwendet, um die Berichtdaten der Datensendeseite zu verschlüsseln; und falls bestimmt wird, dass die Datensendeseite die Methode mit symmetrischem Schlüssel anwendet, um die Berichtdaten der Datensendeseite zu verschlüsseln, die verschlüsselten Berichtdaten, die das Berichtpaket umfasst, unter Verwendung des Schlüssels, der durch die Datensendeseite mit der M2M-Plattform ausgehandelt wird, zu entschlüsseln, um die Berichtdaten zu gewinnen; und die Berichtdaten unter Verwendung des Schlüssels, der durch die M2M-Plattform mit der Datenempfangsseite ausgehandelt wird, zu verschlüsseln, ein Übermittlungspaket zu erzeugen und das Übermittlungspaket an die Datenempfangsseite zu senden, wobei das Übermittlungspaket Informationen zum Anzeigen der Datenverschlüsselungsmethode umfasst, um der Datenempfangsseite anzuzeigen, dass die M2M-Plattform die Methode mit symmetrischem Schlüssel anwendet, um die Berichtdaten der Datensendeseite zu verschlüsseln; und
die Datenempfangsseite (93), die dafür ausgelegt ist, ein durch die M2M-Plattform gesendetes Übermittlungspaket zu empfangen, wobei das Übermittlungspaket Informationen zum Anzeigen der Datenverschlüsselungsmethode umfasst, um der Datenempfangsseite anzuzeigen, ob die M2M-Plattform die KEM-DEM-Methode oder die Methode mit symmetrischem Schlüssel anwendet, um die Berichtdaten der Datensendeseite zu verschlüsseln; falls bestimmt wird, dass die M2M-Plattform die KEM-DEM-Methode anwendet, um die Berichtdaten der Datensendeseite zu verschlüsseln, einen verschlüsselten Datenschlüssel, den das Übermittlungspaket umfasst, unter Verwendung des Schlüssels, der durch die M2M-Plattform mit der Datenempfangsseite ausgehandelt wird, zu entschlüsseln, um den Datenschlüssel zu gewinnen; und die Berichtdaten, die unter Verwendung des Datenschlüssels verschlüsselt sind und die das Übermittlungspaket umfasst, unter Verwendung des Datenschlüssels zu entschlüsseln, um die durch die Datensendeseite gesendeten Berichtdaten zu gewinnen; und falls bestimmt wird, dass die M2M-Plattform die Methode mit symmetrischem Schlüssel anwendet, um die Berichtdaten der Datensendeseite zu verschlüsseln, die verschlüsselten Berichtdaten, die das Übermittlungspaket umfasst, unter Verwendung des Schlüssels, der durch die M2M-Plattform mit der Datenempfangsseite ausgehandelt wird, zu entschlüsseln, um die durch die Datensendeseite gesendeten Berichtdaten zu gewinnen.

## Revendications

1. Procédé de chiffrement et de transmission de données destiné à être utilisé dans des communications entre machines, M2M, le procédé comprenant les étapes consistant à :
déterminer (101), par une extrémité de transmission de données, si une quantité de données relative à des données de rapport dépasse un seuil établi ;
s'il est déterminé que la quantité de données relative aux données de rapport dépasse le seuil établi, chiffrer (102), par l'extrémité de transmission de données, les données de rapport selon un mode KEM-DEM, générer un paquet de rapport et transmettre le paquet de rapport à une plateforme M2M, le paquet de rapport comprenant des informations d'indication de mode de chiffrement de données servant à indiquer à la plateforme M2M que l'extrémité de transmission de données adopte le mode KEM-DEM pour le chiffrement des données de rapport, le mode KEM-DEM signifiant que les données de rapport de l'extrémité de transmission de données et d'autres informations, qui doivent être chiffrées, sont chiffrées séparément ; et
s'il est déterminé que la quantité de données relative aux données de rapport ne dépasse pas le seuil établi, chiffrer (103), par l'extrémité de transmission de données, les données de rapport en utilisant une clé négociée par l'extrémité de transmission de données avec la plateforme M2M, générer un paquet de rapport et transmettre le paquet de rapport à la plateforme M2M, le paquet de rapport comprenant des informations d'indication de mode de chiffrement de données servant à indiquer à la plateforme M2M que l'extrémité de transmission de données adopte un mode à clé symétrique pour le chiffrement des données de rapport.

2. Procédé selon la revendication 1, dans lequel l'étape consistant à chiffrer les données de rapport selon le mode KEM-DEM, générer le paquet de rapport et transmettre le paquet de rapport à la plateforme M2M comprend les étapes consistant à :
obtenir une clé de données pour le chiffrement des données de rapport ;
utiliser la clé de données pour le chiffrement des données de rapport, et utiliser une clé négociée par l'extrémité de transmission de données avec la plateforme M2M pour le chiffrement de la clé de données ; et
générer un paquet de rapport en utilisant les données de rapport chiffrées et une clé de données chiffrée et transmettre le paquet de rapport à la plateforme M2M.

3. Procédé selon la revendication 1 ou 2, dans lequel la clé négociée par l'extrémité de transmission de données avec la plateforme M2M est une clé de session.

4. Procédé de chiffrement et de transmission de données destiné à être utilisé dans des communications entre machines, M2M, le procédé comprenant les étapes consistant à :
recevoir (201), par une plateforme M2M, un paquet de rapport transmis par une extrémité de transmission de données, le paquet de rapport comprenant des informations d'indication de mode de chiffrement de données servant à indiquer à une plateforme M2M si l'extrémité de transmission de données adopte un mode KEM-DEM ou un mode à clé symétrique pour le chiffrement de données de rapport de l'extrémité de transmission de données, le mode KEM-DEM signifiant que les données de rapport de l'extrémité de transmission de données et d'autres informations, qui doivent être chiffrées, sont chiffrées séparément ;
s'il est déterminé que l'extrémité de transmission de données adopte le mode KEM-DEM pour le chiffrement des données de rapport de l'extrémité de transmission de données, séparer (203), par la plateforme M2M, une clé de données chiffrée et des données de rapport chiffrées du paquet de rapport, et déchiffrer la clé de données chiffrée en utilisant une clé négociée par l'extrémité de transmission de données avec la plateforme M2M dans le but d'obtenir une clé de données ; et
chiffrer (204), par la plateforme M2M, la clé de données en utilisant une clé négociée par la plateforme M2M avec une extrémité de réception de données, générer un paquet de remise en utilisant la clé de données chiffrée et les données de rapport chiffrées et transmettre le paquet de remise à l'extrémité de réception de données, le paquet de remise comprenant des informations d'indication de mode de chiffrement de données servant à indiquer à l'extrémité de réception de données que la plateforme M2M adopte le mode KEM-DEM pour le chiffrement des données de rapport de l'extrémité de transmission de données ; et
s'il est déterminé que l'extrémité de transmission de données adopte le mode à clé symétrique pour le chiffrement des données de rapport de l'extrémité de transmission de données, déchiffrer (205), par la plateforme M2M, les données de rapport chiffrées contenues dans le paquet de rapport en utilisant la clé négociée par l'extrémité de transmission de données avec la plateforme M2M dans le but d'obtenir les données de rapport ; et
chiffrer (206), par la plateforme M2M, les données de rapport en utilisant la clé négociée par la plateforme M2M avec l'extrémité de réception de données, générer un paquet de remise et transmettre le paquet de remise à l'extrémité de réception de données, le paquet de remise comprenant des informations d'indication de mode de chiffrement de données servant à indiquer à l'extrémité de réception de données que la plateforme M2M adopte le mode à clé symétrique pour le chiffrement des données de rapport de l'extrémité de transmission de données.

5. Procédé selon la revendication 4, dans lequel,
la clé négociée par l'extrémité de transmission de données avec la plateforme M2M est une clé de session ; et
la clé négociée par la plateforme M2M avec l'extrémité de réception de données est une clé de session.

6. Procédé de chiffrement et de transmission de données, le procédé comprenant les étapes consistant à :
recevoir (301), par une extrémité de réception de données, un paquet de remise transmis par une plateforme M2M, le paquet de remise comprenant des informations d'indication de mode de chiffrement de données servant à indiquer à une extrémité de réception de données si la plateforme M2M adopte un mode KEM-DEM ou un mode à clé symétrique pour le chiffrement de données de rapport d'une extrémité de transmission de données, le mode KEM-DEM signifiant que les données de rapport de l'extrémité de transmission de données et d'autres informations, qui doivent être chiffrées, sont chiffrées séparément ;
s'il est déterminé que la plateforme M2M adopte le mode KEM-DEM pour le chiffrement des données de rapport de l'extrémité de transmission de données, déchiffrer (303), par l'extrémité de réception de données, une clé de données chiffrée contenue dans le paquet de remise en utilisant une clé négociée par la plateforme M2M avec l'extrémité de réception de données dans le but d'obtenir une clé de données ; et déchiffrer, en utilisant la clé de données, des données de rapport chiffrées en utilisant la clé de données et contenues dans le paquet de remise dans le but d'obtenir des données de rapport transmises par l'extrémité de transmission de données ; et
s'il est déterminé que la plateforme M2M adopte le mode à clé symétrique pour le chiffrement des données de rapport de l'extrémité de transmission de données, déchiffrer (304), par l'extrémité de réception de données, des données de rapport chiffrées contenues dans le paquet de remise en utilisant la clé négociée par la plateforme M2M avec l'extrémité de réception de données dans le but d'obtenir les données de rapport transmises depuis l'extrémité de transmission de données.

7. Procédé selon la revendication 6, dans lequel la clé négociée par la plateforme M2M avec l'extrémité de réception de données est une clé de session.

8. Extrémité de transmission de données, comprenant :
une unité de détermination (61), configurée pour déterminer si une quantité de données relative à des données de rapport dépasse un seuil établi ;
une première unité de chiffrement (62), configurée pour chiffrer les données de rapport selon un mode KEM-DEM si l'unité de détermination détermine que la quantité de données relative aux données de rapport dépasse le seuil établi, le mode KEM-DEM signifiant que les données de rapport de l'extrémité de transmission de données et d'autres informations, qui doivent être chiffrées, sont chiffrées séparément ;
une première unité de génération (63), configurée pour générer un paquet de rapport en utilisant des données de rapport chiffrées obtenues par chiffrement par la première unité de chiffrement ; une première unité de transmission (64), configurée pour transmettre le paquet de rapport généré par la première unité de génération à une plateforme M2M, le paquet de rapport comprenant des informations d'indication de mode de chiffrement de données servant à indiquer à la plateforme M2M que l'extrémité de transmission de données adopte le mode KEM-DEM pour le chiffrement des données de rapport ;
une deuxième unité de chiffrement (65), configurée pour : si l'unité de détermination détermine que la quantité de données relative aux données de rapport ne dépasse pas le seuil établi, chiffrer les données de rapport en utilisant une clé négociée par l'extrémité de transmission de données avec la plateforme M2M ;
une deuxième unité de génération (66), configurée pour générer un paquet de rapport en utilisant les données de rapport chiffrées obtenues par la deuxième unité de chiffrement ; et une deuxième unité de transmission, configurée pour transmettre le paquet de rapport généré par la deuxième unité de génération à la plateforme M2M, le paquet de rapport comprenant des informations d'indication de mode de chiffrement de données servant à indiquer à la plateforme M2M que l'extrémité de transmission de données adopte un mode à clé symétrique pour le chiffrement des données de rapport.

9. Extrémité de transmission de données selon la revendication 8, dans laquelle la première unité de chiffrement comprend :
un module d'obtention, configuré pour obtenir une clé de données pour le chiffrement des données de rapport ; et
un module de chiffrement, configuré pour utiliser la clé de données obtenue par le module d'obtention pour le chiffrement des données de rapport, et utiliser une clé négociée par l'extrémité de transmission de données avec la plateforme M2M pour le chiffrement de la clé de données.

10. Plateforme M2M, comprenant :
une unité de réception (71), configurée pour recevoir un paquet de rapport transmis par une extrémité de transmission de données, le paquet de rapport comprenant des informations d'indication de mode de chiffrement de données servant à indiquer à la plateforme M2M si l'extrémité de transmission de données adopte un mode KEM-DEM ou un mode à clé symétrique pour le chiffrement de données de rapport de l'extrémité de transmission de données, le mode KEM-DEM signifiant que les données de rapport de l'extrémité de transmission de données et d'autres informations, qui doivent être chiffrées, sont chiffrées séparément ;
une première unité de déchiffrement (72), configurée pour, s'il est déterminé que l'extrémité de transmission de données adopte le mode KEM-DEM pour le chiffrement des données de rapport de l'extrémité de transmission de données, séparer une clé de données chiffrée et des données de rapport chiffrées du paquet de rapport reçu par l'unité de réception, et déchiffrer la clé de données chiffrée en utilisant une clé négociée par l'extrémité de transmission de données avec la plateforme M2M dans le but d'obtenir une clé de données ;
une première unité de chiffrement (73), configurée pour chiffrer, en utilisant une clé négociée par la plateforme M2M avec une extrémité de réception de données, la clé de données obtenue par déchiffrement par la première unité de déchiffrement ; une première unité de génération (74), configurée pour générer un paquet de remise en utilisant la clé de données chiffrée obtenue par la première unité de chiffrement et les données de rapport chiffrées séparées par la première unité de déchiffrement ; une première unité de transmission (75), configurée pour transmettre le paquet de remise généré par la première unité de génération à l'extrémité de réception de données, le paquet de remise comprenant des informations d'indication de mode de chiffrement de données servant à indiquer à l'extrémité de réception de données que la plateforme M2M adopte le mode KEM-DEM pour le chiffrement des données de rapport de l'extrémité de transmission de données ;
une deuxième unité de déchiffrement (76), configurée pour, s'il est déterminé que l'extrémité de transmission de données adopte le mode à clé symétrique pour le chiffrement des données de rapport de l'extrémité de transmission de données, déchiffrer, en utilisant la clé négociée par l'extrémité de transmission de données avec la plateforme M2M, les données de rapport chiffrées contenues dans le paquet de rapport reçu par l'unité de réception dans le but d'obtenir les données de rapport ;
une deuxième unité de chiffrement (77), configurée pour chiffrer, en utilisant la clé négociée par la plateforme M2M avec l'extrémité de réception de données, les données de rapport obtenues par déchiffrement par la deuxième unité de déchiffrement ;
une deuxième unité de génération (78), configurée pour générer un paquet de remise en utilisant les données de rapport chiffrées obtenues par la deuxième unité de chiffrement ; et
une deuxième unité de transmission (79), configurée pour transmettre le paquet de remise généré par la deuxième unité de génération à l'extrémité de réception de données, le paquet de remise comprenant des informations d'indication de mode de chiffrement de données servant à indiquer à l'extrémité de réception de données que la plateforme M2M adopte le mode à clé symétrique pour le chiffrement des données de rapport de l'extrémité de transmission de données.

11. Extrémité de réception de données, comprenant :
une unité de réception (81), configurée pour recevoir un paquet de remise transmis par une plateforme M2M, le paquet de remise comprenant des informations d'indication de mode de chiffrement de données servant à indiquer à l'extrémité de réception de données si la plateforme M2M adopte un mode KEM-DEM ou un mode à clé symétrique pour le chiffrement de données de rapport d'une extrémité de transmission de données, le mode KEM-DEM signifiant que les données de rapport de l'extrémité de transmission de données et d'autres informations, qui doivent être chiffrées, sont chiffrées séparément ;
une première unité de chiffrement (82), configurée pour : s'il est déterminé que la plateforme M2M adopte le mode KEM-DEM pour le chiffrement des données de rapport de l'extrémité de transmission de données, déchiffrer, en utilisant une clé négociée par la plateforme M2M avec l'extrémité de réception de données, une clé de données chiffrée contenue dans le paquet de remise reçu par l'unité de réception dans le but d'obtenir une clé de données ;
une deuxième unité de déchiffrement (83), configurée pour déchiffrer, en utilisant la clé de données obtenue par déchiffrement par la première unité de déchiffrement, les données de rapport chiffrées en utilisant la clé de données et contenues dans le paquet de remise reçu par l'unité de réception dans le but d'obtenir des données de rapport transmises par l'extrémité de transmission de données ; et
une troisième unité de déchiffrement (84), configurée pour : s'il est déterminé que la plateforme M2M adopte le mode à clé symétrique pour le chiffrement des données de rapport de l'extrémité de transmission de données, déchiffrer, en utilisant la clé négociée par la plateforme M2M avec l'extrémité de réception de données, des données de rapport chiffrées contenues dans le paquet de remise reçu par l'unité de réception dans le but d'obtenir les données de rapport transmises par l'extrémité de transmission de données.

12. Système de chiffrement et de transmission de données dans des communications M2M, comprenant :
une extrémité de transmission de données (91), configurée pour : déterminer si une quantité de données relative à des données de rapport dépasse un seuil établi ; s'il est déterminé que la quantité de données relative aux données de rapport dépasse le seuil établi, chiffrer les données de rapport selon un mode KEM-DEM, le mode KEM-DEM signifiant que les données de rapport de l'extrémité de transmission de données et d'autres informations, qui doivent être chiffrées, sont chiffrées séparément, générer un paquet de rapport et transmettre le paquet de rapport à une plateforme M2M, le paquet de rapport comprenant des informations d'indication de mode de chiffrement de données servant à indiquer à la plateforme M2M que l'extrémité de transmission de données adopte le mode KEM-DEM pour le chiffrement des données de rapport ;
et s'il est déterminé que la quantité de données relative aux données de rapport ne dépasse pas le seuil établi, chiffrer les données de rapport en utilisant une clé négociée par l'extrémité de transmission de données avec la plateforme M2M, générer un paquet de rapport et transmettre le paquet de rapport à la plateforme M2M, le paquet de rapport comprenant des informations d'indication de mode de chiffrement de données servant à indiquer à la plateforme M2M que l'extrémité de transmission de données adopte un mode à clé symétrique pour le chiffrement des données de rapport ;
la plateforme M2M (92), configurée pour : recevoir un paquet de rapport transmis par l'extrémité de transmission de données, le paquet de rapport comprenant des informations d'indication de mode de chiffrement de données servant à indiquer à la plateforme M2M si l'extrémité de transmission de données adopte le mode KEM-DEM ou le mode à clé symétrique pour le chiffrement de données de rapport de l'extrémité de transmission de données ; s'il est déterminé que l'extrémité de transmission de données adopte le mode KEM-DEM pour le chiffrement des données de rapport de l'extrémité de transmission de données, séparer une clé de données chiffrée et des données de rapport chiffrées du paquet de rapport, et déchiffrer la clé de données chiffrée en utilisant la clé négociée par l'extrémité de transmission de données avec la plateforme M2M dans le but d'obtenir une clé de données ; et
chiffrer la clé de données en utilisant une clé négociée par la plateforme M2M avec une extrémité de réception de données, générer un paquet de remise en utilisant la clé de données chiffrée et les données de rapport chiffrées pour et transmettre le paquet de remise à l'extrémité de réception de données, le paquet de remise comprenant des informations d'indication de mode de chiffrement de données servant à indiquer à l'extrémité de réception de données que la plateforme M2M adopte le mode KEM-DEM pour le chiffrement des données de rapport de l'extrémité de transmission de données ; et s'il est déterminé que l'extrémité de transmission de données adopte le mode à clé symétrique pour le chiffrement des données de rapport de l'extrémité de transmission de données, déchiffrer les données de rapport chiffrées contenues dans le paquet de rapport en utilisant la clé négociée par l'extrémité de transmission de données avec la plateforme M2M dans le but d'obtenir les données de rapport ; et
chiffrer les données de rapport en utilisant la clé négociée par la plateforme M2M avec l'extrémité de réception de données, générer un paquet de remise et transmettre le paquet de remise à l'extrémité de réception de données, le paquet de remise comprenant des informations d'indication de mode de chiffrement de données servant à indiquer à l'extrémité de réception de données que la plateforme M2M adopte le mode à clé symétrique pour le chiffrement des données de rapport de l'extrémité de transmission de données ; et
l'extrémité de réception de données (93), configurée pour recevoir un paquet de remise transmis par la plateforme M2M, le paquet de remise comprenant des informations d'indication de mode de chiffrement de données servant à indiquer à l'extrémité de réception de données si la plateforme M2M adopte le mode KEM-DEM ou le mode à clé symétrique pour le chiffrement des données de rapport de l'extrémité de transmission de données ; s'il est déterminé que la plateforme M2M adopte le mode KEM-DEM pour le chiffrement des données de rapport de l'extrémité de transmission de données, déchiffrer une clé de données chiffrée contenue dans le paquet de remise en utilisant la clé négociée par la plateforme M2M avec l'extrémité de réception de données dans le but d'obtenir la clé de données ; et déchiffrer, en utilisant la clé de données, les données de rapport chiffrées en utilisant la clé de données et contenues dans le paquet de remise dans le but d'obtenir les données de rapport transmises par l'extrémité de transmission de données ; et s'il est déterminé que la plateforme M2M adopte le mode à clé symétrique pour le chiffrement des données de rapport de l'extrémité de transmission de données,
déchiffrer les données de rapport chiffrées contenues dans le paquet de remise en utilisant la clé négociée par la plateforme M2M avec l'extrémité de réception de données dans le but d'obtenir les données de rapport transmises par l'extrémité de transmission de données.
